# EUROPÄISCHE PATENTSCHRIFT

(11) **EP 3 247 757 B1**
(45) Veröffentlichungstag und Bekanntmachung des Hinweises auf die Patenterteilung: **21.11.2018**
(21) Anmeldenummer: 16701330.9
(22) Anmeldetag: 22.01.2016
(51) Int. Cl.: C09D 175/04, C08G 18/22, C08G 18/62, C08G 18/79, B01J 23/04, B01J 23/18, C08G 18/32, C08G 18/38, C09D 7/41, C09D 7/63

(54) **BESCHICHTUNGSMITTELSYSTEM BASIEREND AUF LI/BI-KATALYSATOREN**
COATING SYSTEM BASED ON LI/BI CATALYSTS
SYSTÈME DE REVÊTEMENT À BASE DE CATALYSEURS LI/BI

(30) Priorität: 22.01.2015 EP 15152119
(43) Veröffentlichungstag der Anmeldung: 29.11.2017
(73) Patentinhaber: BASF Coatings GmbH, 48165 Münster (DE)
(72) Erfinder: HOFFMANN, Peter, 48308 Senden (DE); SCHNIER, Benedikt, 48231 Warendorf (DE)
(74) Vertreter: BASF IP Association
(86) Internationale Anmeldenummer: PCT/EP2016/051318
(87) Internationale Veröffentlichungsnummer: WO 2016/120160

(56) Entgegenhaltungen:
- EP-A1- 2 762 541
- WO-A1-2012/123198
- DE-A1-102010 005 868
- US-A- 5 011 902

## Beschreibung

Die Erfindung betrifft ein Beschichtungsmittelsystem, das die Komponenten (A) bis (C) sowie gegebenenfalls weitere Komponenten umfasst, wobei in einer ersten Option alle Komponenten (A) bis (C) sowie gegebenenfalls auch die weiteren optionalen Komponenten getrennt voneinander vorliegen, also die einzelnen Komponenten nicht miteinander vermischt sind. In einer zweiten Option des erfindungsgemäßen Beschichtungsmittelsystems können die vorgenannten Komponenten hingegen auch vollständig oder zumindest teilweise miteinander vermischt sein. Sofern die Komponenten zumindest teilweise miteinander vermischt sind, bedeutet dies, dass beispielsweise die Komponente (C) mit der Komponente (A) vermischt ist, während die Komponente (B) getrennt zu diesem Gemisch aus (A) und (C) vorliegt. Gegebenenfalls kann aber auch die Komponente (B) mit einer Teilmenge der Komponente (C) vermischt sein. Weiterhin können die Gemische aus (A) und (C) sowie aus (B) und (C) zusätzlich mindestens eine optionale Komponente wie beispielsweise ein Lösungsmittel enthalten.

Bei der Komponente (A) handelt es sich um mindestens eine polyhydroxygruppenhaltige Verbindung und bei der Komponente (B) handelt es sich um mindestens eine polyisocyanathaltige Verbindung. Die Komponente (C) ist hingegen ein Katalysator, der als Metallkomponenten Lithium und Bismut in einem molaren Verhältnis von mindestens 7 : 1 enthält. Als weitere Komponenten können im erfindungsgemäßen Beschichtungsmittelsystem beispielsweise hydroxylgruppenhaltige Verbindungen (B), Lackadditive (F), Pigmente (H) und/oder Lösungsmittel (J) enthalten sein.

Ein weiterer Gegenstand der vorliegenden Erfindung sind somit auch ein Verfahren zur Herstellung von Polyurethanen, die durch Aushärtung des vorstehend beschriebenen Beschichtungsmittelsystems erhalten werden. "Aushärten" (Aushärtung) im Sinne der vorliegenden Erfindung bedeutet, dass die im erfindungsgemäßen Beschichtungsmittelsystem enthaltenen Komponenten (A) und (B) in Gegenwart des Katalysators gemäß Komponente (C) miteinander unter Ausbildung eines Polyurethans reagieren. Die Reaktion, also das Aushärten, kann dabei zumindest teilweise vonstatten gehen, vorzugsweise erfolgt jedoch ein vollständiges Aushärten, das heißt die im erfindungsgemäßen Beschichtungsmittelsystem enthaltenen Komponenten (A) und (B) reagieren vollständig oder nahezu vollständig miteinander ab.

Weitere Gegenstände der vorliegenden Erfindung sind somit auch Verfahren zur Herstellung des erfindungsgemäßen Beschichtungsmittelsystems. Weiterhin ist die Verwendung des erfindungsgemäßen Beschichtungsmittelsystems oder des Polyurethans, das aus dem erfindungsgemäßen Beschichtungsmittelsystem hergestellt wurde, beispielsweise als Lack, insbesondere als Klarlack oder als pigmentierter Lack, ein Gegenstand der vorliegenden Erfindung.

Ein weiterer Gegenstand der vorliegenden Erfindung ist ein Verfahren zur Erzeugung einer Beschichtung unter Verwendung des erfindungsgemäßen Beschichtungsmittelsystems sowie die Beschichtung als solche.
Ein weiterer Gegenstand der vorliegenden Erfindung ist die Verwendung des Katalysators gemäß Komponente (C) des erfindungsgemäßen Beschichtungsmittelsystems, beispielsweise zur Herstellung von Polyurethanen oder zur Herstellung eines Lacks.

Die Herstellung von Polyurethanen durch Umsetzung einer Verbindung, die mindestens zwei Hydroxylgruppen pro Molekül aufweist, mit einer Verbindung, die mindestens zwei Isocyanatgruppen pro Molekül aufweist, ist schon seit langem bekannt. In Abhängigkeit von der Reaktivität der jeweiligen Verbindungen ist es durchaus möglich, dass ein spontanes und/oder teilweises Aushärten (Reaktion der beiden Eduktkomponenten) bereits durch ein simples Vermischen der jeweiligen Eduktkomponenten erfolgen kann. Aus technischen Gründen soll aber die spontane Reaktion unterdrückt sein, damit eine sichere Handhabung gewährleistet ist. Um dann aber nach dem Vermischen und eine gewissen Latenzzeit die Reaktion ausreichend schnell ablaufen zu lassen, bedient man sich so genannter Katalysatoren.
Eine gezielte Herstellung des Polyurethans erfolgt jedoch in der Regel in Gegenwart eines geeigneten Katalysators. Aufgrund der Reaktivität der beiden Eduktkomponenten des Polyurethans ist es in der Praxis sehr weit verbreitet, dass die jeweiligen Eduktkomponenten getrennt voneinander bereitgestellt werden, wobei gegebenenfalls der Katalysator vorab zu dem hydroxylgruppenhaltige Edukt und/oder dem isocyanatgruppenhaltigen Edukt zugegeben werden kann. Solche Systeme sind in der Praxis unter dem Begriff "Zweikomponenten-(Polyurethan-)Systeme" (2K-Systeme) weitverbreitet und auch kommerziell erhältlich. Es sind auch Mehrkomponentensysteme mit mehr als zwei Komponenten denkbar, es kann sein, dass eine Komponente weder mit der einen noch der anderen Komponente verträglich ist und daher diese drei Komponenten erst direkt vor der Applikation zusammengeführt werden können.

Andererseits ist es auch möglich, einkomponentige Systeme (Gemische/1K-System) bereitzustellen, in denen beispielsweise durch Blockieren der reaktiven Gruppen der einzelnen Edukte, beispielsweise durch Blockierung der freien Isocyanatgruppen mit geeigneten Blockierungsmitteln, die beiden Eduktkomponenten und auch der Katalysator als lagerfähiges Gemisch bereitgestellt werden können. In den einzelnen Ausgangskomponenten bzw. gegebenenfalls im Ausgangsgemisch beim 1K-System sind in der Praxis häufig auch noch weitere Komponenten wie Lösungsmittel oder Lackadditive enthalten.

Ebenso ist es bekannt, dass Polyurethane als Lacke bzw. als Bestandteil von Lacken, beispielsweise bei der Automobilreparatur, ein breites Anwendungsgebiet haben. Das Polyurethan fungiert somit als Beschichtungsmittel. Die entsprechenden Formulierungen, die zumindest die Polyurethanedukte sowie einen geeigneten Katalysator und gegebenenfalls weitere Komponenten wie Lackadditive oder Lösungsmittel enthalten, werden auch als Beschichtungsmittelsystem oder Beschichtungsmittelzusammensetzung bezeichnet.

Polyurethan-Beschichtungsmittel enthalten also üblicherweise einen Katalysator, wobei neben sauren Verbindungen insbesondere tertiäre Amine und/oder Metallverbindungen, wie beispielsweise verschiedene Zinnverbindungen, insbesondere Dibutylzinndilaurat und Dibutylzinnoxid, zum Einsatz kommen.

Der Einsatz zinnhaltiger Katalysatoren ist aufgrund der vielen Alkyl-Zinnverbindungen innewohnenden Toxizität auch in Beschichtungsmitteln zu vermeiden. Von der "Working Group on Classification and Labelling" der EU-Kommission wurden Dibutylzinnoxid (DBTO) und Dibutylzinndilaurat (DBTL) entsprechend kategorisiert.

In dem im Internet unter der Adresse www.wernerblank.com (Stand: 09. Oktober 2014) zugänglichen Artikel "Catalysis of the Isocyanate-Hydroxyl Reaction by Non-Tin Catalysts" von Werner J. Blank, Z. A. He und Ed. T. Hessell der Firma King Industries Inc. werden daher Alternativen zu den üblichen zinnhaltigen Katalysatoren auf Basis verschiedener Metallsalze und Metallkomplexe, wie Zirkoniumchelate, Aluminiumchelat und Bismutcarboxylat, beschrieben. Katalysatoren auf Basis von Lithium oder auf Basis von Gemischen von Bismut mit anderen Metallen werden hingegen nicht beschrieben.

US-A 5,011,902 offenbart eine Zusammensetzung zur Beschichtung von Sperrholzplatten, die ein nicht-zelluläres Polyurethan-Elastomer beinhaltet, das durch Reaktion eines Polyethers oder Polyesterpolyols mit einem Polyisocyanat in der Gegenwart eines Katalysators gewonnen wird. Der Katalysator enthält mindestens eine Bismutverbindung, kann darüber hinaus aber auch noch weitere Metalle, wie Zink, Antimon oder Lithium enthalten. Das Verhältnis von Bismut zu Lithium beträgt gegebenenfalls 1 : 6,6 bis 1 : 1,6.

US-A 4,256,847 beschreibt einen steifen Polyurethanschaum, hergestellt aus einer schäumbaren Mischung, die unter anderem ein organisches Polyisocyanat, ein organisches Polyol und einen Katalysator bestehend aus einer Mischung aus Lithium und Zinksalzen aus aliphatischen oder alicyclischen organischen Monocarbonsäuren oder Mischungen von Säuren enthält. Das Gewichtsverhältnis von Lithium zu Zink kann bis zu 1 : 200 betragen, wird aber im Allgemeinen auf 1 : 2 bis 1 : 25 eingestellt. Die Verwendung von bismuthaltigen Katalysatoren wird hingegen nicht beschrieben.
In WO 2012/123198 A1 wird eine Beschichtungsmittelzusammensetzung beschrieben, die mindestens ein Polyol, ein Polyisocyanat, eine monomere aromatische, gegebenenfalls substituierte Carbonsäure (S), deren Carboxylgruppe in Konjugation zu einem π-Elektronensystem steht, sowie als Katalysator einen Zink-Amidin-Komplex enthält. Keine Erwähnung findet dagegen ein lithium- oder bismuthaltiger Katalysator. In dem Artikel "Replacing a veritable workhorse" im "European Coatings Journal" (Ausgabe: 07-08/2008; insgesamt 11 Seiten, Vincentz-Network) werden die Nachteile von zinnhaltigen Katalysatoren im Zusammenhang mit der Polyurethanherstellung beschrieben und stattdessen können Katalysatoren auf Basis von Bismut und/oder Zink eingesetzt werden. Die Verwendung von lithiumhaltigen Katalysatoren wird in diesem Artikel hingegen nicht beschrieben. EP 2762 541 A offenbart eine Polyurethanbeschichtung für die Fahrzeuglackierung, die durch Aushärtung einer Zusammensetzung enthaltend ein hydroxyfunktionelles Polyacrylat und ein Hexamethylendiisocyanat-Trimer als Vernetzer erhalten wird, wobei eine Mischung aus organometallischem Bismuth-Katalysator und einem Amidin eingesetzt wird.

Aufgabe der vorliegenden Erfindung war es daher, ein neues Beschichtungsmittelsystem bereitzustellen.
Die Aufgabe wird gelöst durch ein Beschichtungsmittelsystem umfassend die Komponenten (A) bis (C) mit
(A) mindestens einer polyhydroxygruppenhaltigen Verbindung,
(B) mindestens einer polyisocyanathaltigen Verbindung und
(C) mindestens einem Katalysator, der als Metallkomponenten Lithium (Li) und Bismut (Bi) enthält und wobei das molare Verhältnis von Lithium zu Bismut mindestens 7 : 1 [mol/mol] beträgt,
wobei
i) die Komponenten (A), (B) und (C) getrennt voneinander vorliegen oder
ii) vollständig oder zumindest teilweise miteinander vermischt sind.

Das erfindungsgemäße Beschichtungsmittelsystem zeichnet sich unter anderem dadurch aus, dass die Verwendung von toxischen zinnhaltigen Katalysatoren vermieden werden kann und/oder eine schnelle Härtung gewährleistet wird.

Der Vorteil ist insbesondere darin zu sehen, dass ein molares Verhältnis von Lithium : Bismut von mindestens 7 : 1 zu einer unerwarteten, deutlichen Verkürzung der Aushärtungszeiten führt. Sofern der Katalysator auch Zink enthält, insbesondere bei einem molaren Verhältnis von Lithium : Zink von mindestens 6 : 1, kommt es ebenfalls zu einer (weiteren) Verkürzung der Aushärtzeit.

Außerdem wurde überraschend festgestellt, dass die Beschichtungsmittelsysteme bei Verwendung von polyhydroxygruppenhaltiger Verbindungen, die Säurezahlen von nicht mehr als 9 mg KOH/g aufweisen, schneller aushärten als vergleichbare Beschichtungsmittelsysteme, die polyhydroxygruppenhaltige Verbindungen mit höheren Säurezahlen enthalten.

Ein weiterer Vorteil der erfindungsgemäßen Beschichtungsmittelsysteme ist in ihrer Verwendung für die Automobilreparaturlackierung und die Beschichtung von Nutzfahrzeugen zu sehen. Die erfindungsgemäßen Beschichtungsmittelsysteme gewährleisten eine gute Montagefestigkeit bereits nach sehr kurzer Zeit. Dadurch wird eine schnelle Aushärtung auch unter den Bedingungen der Reparaturlackierung und der Lackierung von Nutzfahrzeugen gewährleistet, also bereits nach Härtung von 30 min bei 60°C sind sie so weit ausgehärtet, dass erste Montagearbeiten oder Demaskierungen ohne Beschädigung der Beschichtung durchgeführt werden können

Im Rahmen der vorliegenden Erfindung ist unter den Begriffen "Bindemittelgehalt" oder "Bindemittelanteil" bzw. "Bindemittelgehaltbestimmung" (soweit nicht anders aufgeführt) Folgendes zur verstehen:
Der "Bindemittelgehalt" ist jeweils der in Tetrahydrofuran (THF) lösliche Anteil des Beschichtungsmittelsystems enthaltend die Komponenten (A) bis (C) sowie gegebenenfalls (D) bis (J). Der Bindemittelgehalt wird bestimmt, bevor die Aushärtung der Komponenten des Beschichtungsmittelsystems beginnt, also vor der Aushärtung unter Erhalt des Polyurethans. Dazu werden die einzelnen Komponenten des entsprechenden Beschichtungsmittelsystems vollständig miteinander vermischt und anschließend wird eine kleine Probe (P) von 1 g des Beschichtungsmittelsystems gewogen, in der 100-fachen Menge THF gelöst, unlösliche Bestandteile werden abfiltriert, das THF abgedampft und daran anschließend der so erhaltene Festkörper der zuvor in THF gelösten Bestandteile bestimmt, indem für 60 Minuten bei 130 °C getrocknet wird, im Exsikkator abgekühlt wird und dann erneut gewogen wird. Der Rückstand entspricht dem Bindemittelgehalt der Probe (P).

Nachfolgend werden das erfindungsgemäße Beschichtungsmittelsystem sowie die weiteren Gegenstände der vorliegenden Erfindung näher definiert.

Der erste Gegenstand der vorliegenden Erfindung ist das vorstehend bereits aufgeführte Beschichtungsmittelsystem, umfassend die Komponenten (A) bis (C) sowie gegebenenfalls eine weitere Komponente (D) bis (J).

Das erfindungsgemäße Beschichtungsmittelsystem enthält als Komponente (A) mindestens eine polyhydroxygruppenhaltige (polyhydroxylgruppenhaltige) Verbindung. Als polyhydroxygruppenhaltige Verbindung gemäß Komponente (A) können alle dem Fachmann bekannten Verbindungen eingesetzt werden, welche mindestens zwei Hydroxylgruppen pro Molekül aufweisen. Die Anzahl der Hydroxylgruppen (Hydroxygruppen) pro Molekül kann beliebig hoch sein, sie wird über die Hydroxyzahl (OH-Zahl) festgelegt, wie nachfolgend beschrieben. Die Verbindungen gemäß Komponente (A) werden auch als "Polyole" bezeichnet, sie können oligomer und/oder polymer sein. Es können als Komponente (A) somit auch Mischungen von zwei oder mehr oligomerer und/oder polymerer Polyole (polyhydroxygruppenhaltige Verbindungen) eingesetzt werden.

Vorzugsweise weisen die polyhydroxygruppenhaltigen Verbindungen gemäß Komponente (A) massenmittlere Molekulargewichte Mw ≥ 500 Dalton, insbesondere M_{w} ≥ 1 000 Dalton, auf. Der M_{w}-Wert kann bestimmt werden mittels Gelpermeationschromatographie (GPC) gegen einen Polystyrolstandard (siehe auch nachfolgend im experimentellen Teil). Weiterhin bevorzugt sind massenmittlere Molekulargewichte M_{w} zwischen 1 000 und 20 000 Dalton, insbesondere zwischen 1 500 und 10 000 Dalton.

Die Polyole weisen bevorzugt eine OH-Zahl von 30 bis 400 mg KOH/g (Polyol), insbesondere zwischen 100 und 300 KOH/g, auf. Die Hydroxylzahl (OH-Zahl) gibt an, wie viel mg Kaliumhydroxid der Essigsäure-Menge äquivalent sind, die von 1 g Substanz (Polyol) bei der Acetylierung (des entsprechenden Polyols mit Essigsäure) gebunden wird. Die Probe wird bei der Bestimmung mit Essigsäureanhydrid-Pyridin gekocht und die entstehende Säure mit Kaliumhydroxidlösung titriert (DIN 53240-2 (2007-11)). Im Falle reiner Poly-(Meth)-Acrylate kann die OH-Zahl auch durch Berechnung auf Basis der eingesetzten OH-funktionellen Monomere ausreichend genau bestimmt werden.

Weiterhin ist es bevorzugt, dass die Polyole eine Säurezahl zwischen 0 und 30 mg KOH/g aufweisen. Bevorzugt ist dabei, dass die Säurezahl der polyhydroxygruppenhaltigen Verbindung gemäß Komponente (A) nicht mehr als 9 mg KOH/g der entsprechenden polyhydroxygruppenhaltigen Verbindung, vorzugsweise nicht mehr als 7 mg KOH/g der entsprechenden polyhydroxygruppenhaltigen Verbindung, insbesondere 0,5 bis 5 mg KOH/g der entsprechenden polyhydroxygruppenhaltigen Verbindung, beträgt.

Die Säurezahl gibt hierbei die Anzahl der mg Kaliumhydroxid an, die zur Neutralisation von 1 g der jeweiligen Verbindung (Polyol/polyhydroxygruppenhaltigen Verbindung) verbraucht wird (DIN EN ISO 2114:2006-11).

Sofern die Polyole eine niedrige Säurezahl aufweisen, vorzugsweise von nicht mehr als 9 mg KOH/g der entsprechenden polyhydroxygruppenhaltigen Verbindung, ist es bevorzugt, dass das entsprechende Polyol i) auf Monomeren basiert, die vollständig veresterte Säurefunktionen aufweisen, vorzugsweise werden diese Monomere vor ihrem Einsatz aufgereinigt, ii) auf Monomeren basiert, die keine oder nur eine geringe Menge an freien Säurefunktionen aufweisen, vorzugsweise umfassen die Monomere keine säuregruppenhaltigen Monomere, insbesondere keine Acrylsäure oder keine Methacrylsäure, und/oder iii) auf Monomeren basiert, die keine phosphatgruppenhaltigen Monomere (PO₄-haltige Monomere) umfassen. Vorzugsweise sind alle drei der vorgenannten Optionen verwirklicht.

Die Glasübergangstemperaturen (T_{G}-Werte) der Polyole, gemessen mit Hilfe von DSC-Messungen nach DIN-EN-ISO 11357-2:2011-04-28, können beliebige Werte annehmen und liegen bevorzugt zwischen -150 und 150 °C, besonders bevorzugt zwischen 40 und 120 °C.

Bevorzugt als polyhydroxygruppenhaltige Verbindungen (Polyole) sind Polyesterpolyole, Polyurethanpolyole, Polysiloxanpolyole, Polyacrylatpolyole und/oder Polymethacrylatpolyole. Beispiele für solche Verbindungen sind aufgeführt in Poth Schwalm, Schwarz: Acrylatharze. Vincentz Verlag Hannover, ISBN: 9783866308718. Die vorgenannten Polymerklassen wie Polyacrylatpolyole oder Polymethacrylatpolyole können sämtlich jeweils als Homopolymer oder als Copolymer (Copolymerisat) von mindestens zwei unterschiedlichen Monomeren eingesetzt werden. Im Rahmen der vorliegenden Erfindung werden vorzugsweise Copolymere als polyhydroxygruppenhaltige Verbindungen, insbesondere in den vorgenannten Polymerklassen, eingesetzt. Die Polymerklassen basieren auf mindestens einem hydroxygruppenhaltigen Monomerbaustein. Für die jeweilige Polymerklasse geeignete Monomere (Monomerbausteine) sind dem Fachmann bekannt. Ebenso ist dem Fachmann bekannt, nach welchen konkreten (Polymerisations-)Verfahren die jeweiligen Polymere aus den entsprechenden Monomeren hergestellt werden können. Weiterhin können auch Gemische von mindestens zwei unterschiedlichen konkreten Polymeren einer Polymerklasse und/oder Gemische von jeweils mindestens einem konkreten Polymer aus mindestens zwei unterschiedlichen Polymerklassen vorliegen. Ebenso ist es möglich, dass so genannte Mischpolymerisate vorliegen, also Polymere, die Fragmente enthalten, die zwei oder mehreren Polymerklassen zugeordnet werden können.

Geeignete Polyesterpolyole sind beispielsweise in EP-A-0 994 117 und EP-A 1 273 640 beschrieben. Polyurethanpolyole werden vorzugsweise durch Umsetzung von Polyesterpolyol-Präpolymeren mit geeigneten Di- oder Polyisocyanaten hergestellt und sind beispielsweise in EP-A 1 273 640 beschrieben. Geeignete Polysiloxanpolyole sind beispielsweise in der WO-A-01/09260 beschrieben, wobei die dort angeführten Polysiloxanpolyole bevorzugt in Kombination mit weiteren Polyolen, insbesondere solchen mit höheren Glasübergangstemperaturen, zum Einsatz kommen können.

Mehr bevorzugt enthält die Komponente (A) ein oder mehrere Polyacrylatpolyole und/oder Polymethacrylatpolyole. Die beiden vorgenannten Polymere bzw. Polymerklassen werden auch als Poly(meth)acrylatpolyole bezeichnet. Zusammen mit dem oder den Polyacrylatpolyolen und/oder Polymethacrylatpolyolen können weitere oligomere und/oder polymere polyhydroxylgruppenhaltige Verbindungen, beispielsweise Polyesterpolyole, Polyurethanpolyole und Polysiloxanpolyole, insbesondere Polyesterpolyole, eingesetzt werden.

Die erfindungsgemäß als Komponente (A) mehr bevorzugt eingesetzten Poly(meth)acrylatpolyole basieren vorzugsweise auf mindestens einem der nachfolgend aufgeführten Monomere (Monomerbausteine). Mehr bevorzugt wird hierfür mindestens einer der nachfolgenden hydroxylgruppenhaltigen Monomerbausteine und gegebenenfalls mindestens einer der nachfolgenden Monomerbausteine, die keine hydroxylgruppenhaltigen Monomerbausteine sind, eingesetzt. Besonders bevorzugt werden Copolymere eingesetzt, die auf mindestens einem hydroxylgruppenhaltigen Monomerbaustein und mindestens einem Monomerbaustein, der keine Hydroxylgruppen enthält, basieren. Beispiele für die entsprechenden Monomerbausteine werden nachfolgend aufgeführt.

Als hydroxylgruppenhaltige Monomerbausteine werden für die Poly(meth)acrylatpolyole bevorzugt Hydroxyalkylacrylate und/oder Hydroxyalkylmethacrylate eingesetzt. Vorzugweise sind diese ausgewählt aus 2-Hydroxyethylacrylat, 2-Hydroxyethylmethacrylat, 2-Hydroxypropylacrylat, 2-Hydroxypropylmethacrylat, 3-Hydroxypropylacrylat, 3-Hydroxypropylmethacrylat, 3-Hydroxybutylacrylat, 3-Hydroxybutylmethacrylat, 4-Hydroxybutylacrylat und/oder 4-Hydroxybutylmethacrylat. Besonders bevorzugt sind die hydroxylgruppenhaltigen Monomerbausteine 4-Hydroxybutylacrylat und/oder 4-Hydroxybutylmethacrylat. Die hydroxylgruppenhaltigen Monomerbausteine werden vorzugsweise zu 20 bis 60 Gew.-%, bezogen auf die Monomergesamtmenge des jeweiligen Polymers, eingesetzt.

Als weitere Monomerbausteine werden für die Poly(meth)acrylatpolyole bevorzugt Alkylacrylate und/oder Alkylmethacrylate eingesetzt. Vorzugsweise sind diese ausgewählt aus Methylacrylat, Methylmethacrylat, Ethylacrylat, Ethylmethacrylat, Propylacrylat, Propylmethacrylat, Isopropylacrylat, Isopropylmethacrylat, Butylacrylat, Butylmethacrylat, Isobutylacrylat, Isobutylmethacrylat, tert-Butylacrylat, tert-Butylmethacrylat, Amylacrylat, Amylmethacrylat, Hexylacrylat, Hexylmethacrylat, Ethylhexylacrylat, Ethylhexylmethacrylat, 3,3,5-Trimethylhexylacrylat, 3,3,5-Trimethylhexylmethacrylat, Stearylacrylat, Stearylmethacrylat, Laurylacrylat, Laurylmethacrylat, Cycloalkylacrylate und/oder Cycloalkylmethacrylate. Bevorzugte Cycloalkyl(meth)acrylate sind Cyclopentylacrylat, Cyclopentylmethacrylat, Isobornylacrylat, Isobornylmethacrylat oder insbesondere Cyclohexylacrylat und/oder Cyclohexylmethacrylat. Sofern die vorstehenden Monomere eingesetzt werden, erfolgt dies vorzugsweise in Mengen von 35 bis 80 Gew.-%, bezogen auf die Monomergesamtmenge.

Als weitere Monomerbausteine für die Poly(meth)acrylatpolyole können vinylaromatische Kohlenwasserstoffe, wie Vinyltoluol, alpha-Methylstyrol oder insbesondere Styrol, Amide oder Nitrile der Acryl- oder Methacrylsäure, Vinylester oder Vinylether, sowie Acryl- und/oder Methacrylsäure eingesetzt werden. Sofern vinylaromatische Kohlenwasserstoffe als Monomere eingesetzt werden, erfolgt dies vorzugsweise in Mengen von 0,1 bis 40 Gew.-%, bezogen auf die Monomergesamtmenge. Sofern Acryl- und/oder Methacrylsäure eingesetzt wird, erfolgt dies vorzugsweise in Mengen von 0,1 bis 5 Gew.-%, bezogen auf die Gesamtmenge der eingesetzten Monomere

Des Weiteren können Verbindungen als Monomerbaustein eingesetzt werden, die über eine Phosphatgruppe verfügen. Diese werden durch Umsetzung geeigneter hydroxylgruppenhaltiger (meth)acrylischer Verbindungen durch Umesterung hergestellt.

Solche Monomere sind vorzugsweise durch die allgemeine Formel (1) wiedergegeben:

(R')₂C = C(R')(-COO-R"-O-P(O)(-OR)₂) (1)

Mit R' = H oder CH₃
R" = Alkyl oder Alkyl-O-alkyl und
R"' = H oder Alkyl.

In den vorgenannten Resten R', R" und R"' kann Alkyl verzweigt oder unverzweigt sowie gegebenenfalls cyclisch sein. Unter dem Begriff "Alkyl" werden im Rahmen der vorliegenden Erfindung gesättigte Kohlenwasserstoffreste mit mindestens einem Kohlenstoffatom wie Methyl (C₁-Alkyl), Ethyl (C₂-Alkyl) oder Hexyl (C₆-Alkyl) verstanden. Die Anzahl der Kohlenstoffatome ist prinzipiell nicht beschränkt, vorzugsweise sind es nicht mehr als 18 C-Atome pro Alkyl. Sofern vorhanden, werden solche Monomere in Mengen von 0,1 bis 20 Gew.-%, bezogen auf die Gesamtmonomermenge, eingesetzt. Solche Monomere sind kommerziell erhältlich, beispielsweise als Sipomer PAM® der Rhodia Solvay Group.

Die erfindungsgemäß als Komponente (A) besonders bevorzugten Poly(meth)acrylat-polyole sind vorzugsweise Copolymerisate und weisen vorzugsweise massenmittlere Molekulargewichte Mw zwischen 1 000 und 20 000 Dalton, insbesondere zwischen 1 500 und 10 000 Dalton auf, jeweils gemessen mittels Gelpermeationschromatographie (GPC) gegen einen Polystyrolstandard.

Die Glasübergangstemperatur der Poly(meth)acrylatpolyole liegt in der Regel zwischen -150 und 150 °C, insbesondere zwischen -40 und 120 °C (gemessen mittels DSC-Messungen nach DIN-EN-ISO 11357-2:2011-04-28).

Die Poly(meth)acrylatpolyole weisen bevorzugt eine OH-Zahl von 60 bis 250 mg KOH/g (Polyol), insbesondere zwischen 70 und 200 mg KOH/g auf.

Weiterhin ist es bevorzugt, dass die Poly(meth)acrylatpolyole eine Säurezahl zwischen 0 und 30 mg KOH/g aufweisen. Bevorzugt ist dabei, dass die Säurezahl der Poly(meth)acrylatpolyole gemäß Komponente (A) nicht mehr als 9 mg KOH/g der entsprechenden Poly(meth)acrylatpolyole, vorzugsweise nicht mehr als 7 mg KOH/g der entsprechenden Poly(meth)acrylatpolyole, insbesondere 0,5 bis 5 mg KOH/g der entsprechenden Poly(meth)acrylatpolyole, beträgt.

Die Säurezahl gibt hierbei die Anzahl der mg Kaliumhydroxid an, die zur Neutralisation von 1 g der jeweiligen Verbindung (Poly(meth)acrylatpolyole) verbraucht wird (DIN EN ISO 2114:2006-11).

Sofern die als Komponente (A) eingesetzten Poly(meth)acrylatpolyole eine niedrige Säurezahl aufweisen, vorzugsweise eine Säurezahl von nicht mehr als 9 mg KOH pro Gramm der entsprechenden Poly(meth)acrylatpolyole, ist es bevorzugt, dass das entsprechende Poly(meth)acrylatpolyol auf den folgenden monomeren Bausteinen basiert (die Gewichtsprozentangaben sind jeweils bezogen auf die Monomergesamtmenge des jeweiligen Polymers):
20 bis 60 Gew.-% von mindestens einem Hydroxyalkylacrylat oder Hydroxyalkylmethacrylat (wie vorstehend definiert),
35 bis 80 Gew.-% von mindestens einem Alkylacrylat oder Alkylmethacrylat (wie vorstehend definiert) und
0 bis 40 Gew.-%, vorzugsweise 0,1 bis 40 Gew.-%, von mindestens einem vinylaromatischen Kohlenwasserstoff (wie vorstehend definiert), vorzugsweise von Styrol.

Bei dem vorstehend aufgeführten Poly(meth)acrylatpolyolen mit einer niedrigen Säurezahl ist es weiterhin bevorzugt, dass bei deren Herstellung keine oder eine nur sehr geringe Menge (maximal 0,5 Gew.-%) an Monomeren eingesetzt wird, die über eine freie Säurefunktion verfügen und/oder die eine Phosphatgruppe enthalten. Insbesondere werden in diesem Zusammenhang keine oder nur in geringen Mengen Monomere eingesetzt, die ausgewählt sind aus Acrylsäure, Methacrylsäure oder phosphatgruppenhaltigen Monomeren der vorstehend beschriebenen allgemeinen Formel (1).

Die Komponente (A) kann im erfindungsgemäßen Beschichtungsmittelsystem prinzipiell in beliebigen dem Fachmann bekannten Anteilen enthalten sein. Vorzugsweise hat die Komponente (A) einen Anteil von 30 bis 80 Gew.-%, mehr bevorzugt von 50 bis 70 Gew.-%, jeweils bezogen auf den Bindemittelgehalt des Beschichtungsmittelsystems.

Das erfindungsgemäße Beschichtungsmittelsystem enthält als Komponente (B) mindestens eine polyisocyanathaltige Verbindung. Als polyisocyanathaltige Verbindung können alle dem Fachmann hierfür bekannten Verbindungen eingesetzt werden (siehe beispielsweise in Ulrich Meier-Westhues: Polyurethane. Lacke, Kleb- und Dichtstoffe. Vincentz-Verlag, ISBN: 9783866308961, April 2007). Als Komponente (B) geeignet sind zum Beispiel an sich bekannte substituierte oder unsubstituierte aromatische, aliphatische, cycloaliphatische und/oder heterocyclische Polyisocyanate.

Beispiele für bevorzugte polyisocyanathaltige Verbindungen sind: 2,4-Toluoldiisocyanat, 2,6-Toluoldiisocyanat, Diphenylmethan-4,4'-diisocyanat, Diphenylmethan-2,4'-diisocyanat, p-Phenylendiisocyanat, Biphenyldiisocyanate, 3,3'-Dimethyl-4,4'-diphenylendiisocyanat, Tetramethylen-1,4-diisocyanat, Hexamethylen-1,6-diisocyanat, 2,2,4-Trimethylhexan-1,6-diisocyanat, Isophorondiisocyanat, Ethylendiisocyanat, 1,12-Dodecandiisocyanat, Cyclobutan-1,3-diisocyanat, Cyclohexan-1,3-diisocyanat, Cyclohexan-1,4-diisocyanat, Methylcyclohexyldiisocyanate, Hexahydrotoluol-2,4-diisocyanat, Hexahydrotoluol-2,6-diisocyanat, Hexahydrophenylen-1,3-diisocyanat, Hexahydrophenylen-1,4-diisocyanat, Perhydrodi-phenylmethan-2,4'-diisocyanat, 4,4'-Methylendicyclohexyldiisocyanat (z. B. Desmodur® W der Fa. Bayer AG), Tetramethylxylylendiisocyanate (TMXDI; kommerziell erhältlich beispielsweise als TMXDI® der Fa. American Cyanamid) und Mischungen der vorgenannten Polyisocyanate. TMXDI wird auch als m-TMXDI; Bisisocyanatopropylbenzol; m-Phenyldimethyldiisocyanat; m-Tetramethylxylylendiisocyanat; Tetramethyl-m-xylylendiisocyanat; 1,3-Bis(2-isocyanato-2-propyl)benzol oder 1,3-Bis(alpha-isocyanatoisopropyl)benzol bezeichnet.

Bevorzugte polyisocyanathaltige Verbindungen sind auch die Biuret-Dimere und Iminooxadiazindione der vorgenannten Diisocyanate. Ebenso bevorzugt sind 1,6-Hexamethylendiisocyanat (HMDI), Isophorondiisocyanat (IPDI) und 4,4'-Methylendicyclohexyldiisocyanat, deren Biuret-Dimere und/oder deren Iminooxadiazindione und/oder deren asymmetrische Trimere, wie z. B. das im Handel unter der Bezeichnung Desmodur N3900 erhältliche asymmetrische HDI-Trimer mit Anteilen asymmetrischer Trimere.

Mehr bevorzugte polyisocyanathaltige Verbindungen sind ausgewählt aus 1,6-Hexamethylendiisocyanat, Isophorondiisocyanat, 4,4'-Methylendicyclohexyldiisocyanat, den Biuret-Dimeren der vorgenannten Diisocyanate, den Iminooxadiazindione der vorgenannten Diisocyanate und/oder den asymmetrischen Trimeren der vorgenannten Diisocyanate.

In einer weiteren Ausführungsform der Erfindung sind die Polyisocyanate Polyisocyanat-Präpolymerisate mit Urethan-Struktureinheiten, welche durch Umsetzung von Polyolen mit einem stöchiometrischen Überschuss an vorgenannten Polyisocyanaten erhalten werden. Solche Polyisocyanat-Präpolymere sind beispielsweise in US-A 4, 598, 131 beschrieben.

Polyisocyanathaltige Verbindungen gemäß Komponente (B) können in einem geeigneten Lösungsmittel (J) vorliegen, wie nachfolgend im Zusammenhang mit dem Lösungsmittel (J) sowie dem Herstellungsverfahren des erfindungsgemäßen Beschichtungsmittelsystems weiter ausgeführt.

Sofern das erfindungsgemäße Beschichtungsmittelsystem als einkomponentiges System (1K-System) bereitgestellt werden soll, so werden vorzugsweise polyisocyanatgruppenhaltige Verbindungen (B) gewählt, deren freie Isocyanatgruppen mit Blockierungsmitteln blockiert sind. Beispielsweise können die Isocyanatgruppen mit substituierten Pyrazolen, insbesondere mit alkylsubstituierten Pyrazolen wie 3-Methylpyrazol, 3,5-Dimethylpyrazol, 4-Nitro-3,5-dimethylpyrazol oder 4-Bromo-3,5-dimethylpyrazol blockiert werden. Besonders bevorzugt werden die Isocyanatgruppen der Komponente (B) mit 3,5-Dimethylpyrazol blockiert. Zur Ausbildung von Polyurethanen (vernetzter Urethane) werden die so blockierten Polyisocyanate mit (weiteren) Komponenten (A) bei erhöhter Temperatur zur Reaktion gebracht wobei durch z.B. Um-urethanisierung und Freisetzung der Blockierungskomponente eine Netzwerkstruktur aufgebaut wird. Das Blockierungsmittel kann bei den gegebenen Temperaturen ggfs. ganz oder teilweise entweichen oder auch als weitere Komponente gänzlich im Lackfilm verbleiben.

Die Komponente (B) im erfindungsgemäßen Beschichtungsmittelsystem kann prinzipiell in beliebigen dem Fachmann bekannten Mengen vorliegen. Vorzugsweise hat die Komponente (B) einen Anteil von 20 bis 50 Gew.-%, besonders bevorzugt von 25 bis 40 Gew.-%, jeweils bezogen auf den Bindemittelgehalt des Beschichtungsmittelsystems.

Weiterhin ist es bevorzugt, dass im erfindungsgemäßen Beschichtungsmittelsystem die Gewichtsanteile der Komponente (A) und der Komponente (B) so ausgewählt werden, dass das molare Äquivalentverhältnis der Hydroxylgruppen der polyhydroxylgruppenhaltigen Verbindungen gemäß Komponente (A) gegenüber den Isocyanatgruppen der polyisocyanathaltigen Verbindung gemäß Komponente (B) zwischen 1 : 0,9 und 1 : 1,5, bevorzugt zwischen 1 : 0,9 und 1 : 1,2, besonders bevorzugt zwischen 1 : 0,95 und 1 : 1,1 liegt. Wenn im erfindungsgemäßen Beschichtungsmittelsystem auch eine hydroxygruppenhaltige Verbindung gemäß Komponente (D) enthalten ist, wird deren Anteil an den vorgenannten molaren Äquivalentverhältnissen im Gewichtsanteil der Komponente (A) mitberücksichtigt. Das heißt, bei dieser Fallkonstellation ist die Summe der Hydroxylgruppen der polyhydroxygruppenhaltigen Verbindung gemäß Komponente (A) und der hydroxylgruppenhaltigen Verbindung gemäß Komponente (D) zu berücksichtigen.

Das erfindungsgemäße Beschichtungsmittelsystem enthält als Komponente (C) mindestens einen Katalysator, der als Metallkomponenten Lithium (Li) und Bismut (Bi) enthält, und wobei das molare Verhältnis von Lithium zu Bismut mindestens 7 : 1 [mol/mol] beträgt
Katalysatoren als solche, die Metallkomponenten wie Lithium oder Bismut beispielsweise in molaren Verhältnissen von 1 : 1 enthalten und die zur Herstellung von Polyurethanen geeignet sind, sind dem Fachmann bekannt. Der Fachmann weiß, wie im Katalysator ein molares Verhältnis der Metallkomponenten Lithium zu Bismut von mindestens 7 : 1 [mol/mol] eingestellt werden kann. Die Metallkomponenten können im Katalysator in Form von Salzen von mindestens einer organischen Säure eingesetzt werden. Das Metall ist dabei das Kation, die organische Säure das Anion des entsprechenden Salzes. Es können auch Gemische von organischen Säuren als Anion eingesetzt werden. Die organischen Säuren weisen Kohlenwasserstofffragmente auf, vorzugsweise sind sie (langkettige) Carbonsäuren mit 2 bis 30 Kohlenstoffatomen, mehr bevorzugt mit 6 bis 18 Kohlenstoffatomen (C₆-C₁₈-Carbonsäuren), besonders bevorzugt mit 8 bis 12 Kohlenstoffatomen (C₈-C₁₂-Carbonsäuren), wie 2-Ethylhexansäure, n-Octansäure oder Neodecansäure. Die Katalysatoren können auch als alkoholische Lösung vorliegen, beispielsweise im Fall von zinkhaltigen Katalysatoren oder als Lösung in der korrespondierenden organischen Säure, beispielsweise im Fall von Bi-Neodecanoat. Daneben können weitere Stoffe enthalten sein, die der Stabilisierung der Verbindungen gegenüber Spuren von Wasser oder auch zur Verhinderung der Kristallisationsneigung dienlich sind.

Beispielsweise können die Katalysatoren gemäß Komponente (C) hergestellt werden durch Vermischen der entsprechenden Salze von organischen Säuren in den entsprechenden molaren Verhältnissen. Dabei ist es auch möglich, dass der Katalysator gemäß Komponente (C) erst in situ im erfindungsgemäßen Beschichtungsmittelsystem hergestellt wird. Beispielsweise können die lithiumhaltige Komponente und die bismuthaltige Komponente des Katalysators zunächst getrennt voneinander oder jeweils als Gemisch mit jeweils einer der Komponenten (A) oder (B) bereitgestellt werden.

Neben den Metallkomponenten Lithium und Bismut können die Katalysatoren gemäß Komponente (C) auch noch weitere Metallkomponenten außer Lithium und Bismut enthalten. Als weitere Metallkomponenten kommen prinzipiell alle Metalle in Frage, die dem Fachmann in Zusammenhang mit der Herstellung von Polyurethan oder Beschichtungsmittelsystemen bekannt sind. Die weiteren Metallkomponenten können prinzipiell in beliebigen molaren Verhältnissen zu Lithium und/oder Bismut eingesetzt werden. Als weitere Metallkomponente wird vorzugsweise Zink (Zn), Zirkonium (Zr) und/oder Aluminium (AI), insbesondere Zink (Zn), eingesetzt.

Vorzugsweise liegt der Katalysator als Salz vor, mehr bevorzugt als Li-Salz und/oder Bi-Salz mit C₆-C₁₈-Carbonsäuren als Anionenkomponente des jeweiligen Salzes, noch mehr bevorzugt als Li-Salz und/oder Bi-Salz mit C₈-C₁₂-Carbonsäure, insbesondere als Bi-octoat, Li-octoat, Li- oder Bi-Salz der C₁₀-Neodekansäure und/oder Li- oder Bi-Salz der C₉-Neononansäure.

Besonders bevorzugt weist der Katalysator gemäß Komponente (C) ein molares Verhältnis von Lithium zu Bismut von 7,5 : 1 bis 12 : 1 [mol/mol], insbesondere von 8 : 1 bis 10 : 1 [mol/mol], auf.

Sofern ein Katalysator eingesetzt wird, der zusätzlich Zink als Metallkomponente aufweist, ist bevorzugt, dass das molare Verhältnis von Lithium zu Zink mindestens 5 : 1 [mol/mol], vorzugsweise von 6 : 1 bis 12 : 1 [mol/mol], insbesondere 7,5 : 1 bis 10 : 1 [mol/mol], beträgt.

Der Katalysator gemäß Komponente (C) kann im erfindungsgemäßen Beschichtungsmittelsystem prinzipiell in beliebigen dem Fachmann bekannten Mengen vorliegen. Vorzugsweise hat die Komponente (C) einen Anteil von 35 bis 2000 Gew.-ppm, mehr bevorzugt von 35 bis 1000 Gew.-ppm und besonders bevorzugt von 100 bis 1000 Gew.-ppm, jeweils bezogen auf den Bindemittelgehalt des Beschichtungsmittelsystems.

Im erfindungsgemäßen Beschichtungsmittelsystem können gegebenenfalls außer den vorstehend beschriebenen Katalysatoren gemäß Komponente (C) auch sonstige Katalysatoren zusätzlich eingesetzt werden, die dem Fachmann im Zusammenhang mit der Herstellung von Polyurethanen oder Beschichtungsmittelsystemen bekannt sind, die aber nicht unter die Definition der Katalysatoren gemäß Komponente (C) fallen.

Wie eingangs bereits beschrieben, können die vorstehend definierten Komponenten (A) bis (C) im erfindungsgemäßen Beschichtungsmittelsystem i) getrennt voneinander vorliegen oder ii) vollständig oder zumindest teilweise miteinander vermischt sein. Sofern die Komponenten (A) bis (C) gemäß der ersten Option getrennt voneinander vorliegen, handelt es sich hierbei vorzugsweise um das vorstehend bereits erwähnte Zweikomponentensystem (2K-System), wobei unter der Definition eines 2K-Systems auch solche Systeme verstanden werden, bei denen drei oder mehr unterschiedliche Komponenten bereitgestellt werden. Als 2K-Systeme werden im Rahmen der vorliegenden Erfindung prinzipiell alle Beschichtungsmittelsysteme verstanden, bei denen die Komponenten (A) und (B) getrennt voneinander vorliegen, insbesondere vor der Applikation des entsprechenden Systems, beispielsweise in der Ausbildung eines Polyurethans bzw. eines Lackes.

Dies bedeutet aber auch, dass die bei der vorgenannten zweiten Option, zweite Variante, umfassten Beschichtungsmittelsysteme, in denen die Komponenten (A) bis (C) zumindest teilweise miteinander vermischt sind, ebenfalls als 2K-System im Sinne der vorliegenden Erfindung aufzufassen sind, sofern die Komponenten (A) und (B) getrennt voneinander vorliegen. Die Komponente (C) kann bei dieser Fallkonstellation jedoch zumindest teilweise oder vollständig mit einer oder beiden Komponenten (A) und (B) vermischt sein.

Der Begriff "zumindest teilweise miteinander vermischt" hat im Rahmen der vorliegenden Erfindung die vorliegenden Bedeutung, die exemplarisch an einem Beispiel verdeutlicht ist. Beispielsweise ist die Komponente (C) mit der Komponente (A) vermischt, während die Komponente (B) getrennt zu diesem Gemisch aus (A) und (C) vorliegt. Gegebenenfalls kann aber auch die Komponente (B) mit einer Teilmenge der Komponente (C) vermischt sein. Weiterhin können die Gemische aus (A) und (C) sowie aus (B) und (C) zusätzlich mindestens eine optionale Komponente wie nachfolgend definiert enthalten.

Sofern im erfindungsgemäßen Beschichtungsmittelsystem gemäß vorstehend definierter zweiter Option, erste Variante, die Komponenten (A) bis (C) vollständig miteinander vermischt sind, handelt es sich hierbei vorzugsweise um ein vorstehend bereits erwähntes einkomponentiges System (1K-System), bei dem die freien Isocyanatgruppen der Komponente (B) vorzugsweise durch geeignete Blockierungsmittel blockiert sind.

Zwar können die einzelnen Komponenten (A) bis (C) jeweils in Teilmengen bereitgestellt werden, wobei einzelne Teilmengen wiederum mit anderen Komponenten, beispielsweise den nachstehend beschriebenen optionalen Komponenten, vermischt sein können. Vorzugsweise werden jedoch die Komponenten (A) und (B) nicht in Teilen, sondern jeweils als einzelne (komplette) Komponente bereitgestellt. Wie vorstehend beschrieben, kann jedoch insbesondere der Katalysator gemäß Komponente (C) in Teilmengen und/oder in Teilkomponenten mindestens einer der beiden Komponenten (A) und/oder (B) zumindest teilweise miteinander vermischt sein. Bei dieser Fallkonstellation wird der Katalysator gemäß Komponente (C) vorzugsweise in situ unmittelbar vor der Applikation des entsprechenden Beschichtungsmittelsystems hergestellt.

Erfindungsgemäß werden sämtliche Komponenten (A) bis (C) sowie gegebenenfalls die nachfolgend beschriebenen optionalen Komponenten des jeweiligen Beschichtungsmittelsystems spätestens (unmittelbar) vor der gewünschten Anwendung miteinander vollständig vermischt, unabhängig davon, ob es sich um ein 1K-System oder um ein 2K-System handelt. Beispiele für (gewünschte) Anwendungen werden im nachfolgenden Text beschrieben. Im Rahmen dieser Anwendungen findet dann das vorstehend bereits beschriebene Aushärten des erfindungsgemäßen Beschichtungsmittelsystems unter Polyurethanausbildung durch Reaktion der Komponenten (A) und (B) statt. Aufgrund der teilweise hohen Reaktivität dieser beiden Komponenten ist es häufig vorteilhaft, diese Komponenten im Rahmen des Beschichtungsmittelsystems (also vor der gewünschten Anwendung) getrennt voneinander bereitzustellen (auch im Zusammenhang mit einer erhöhten Lagerstabilität). Folglich kann die Polyurethanreaktion im Rahmen der gewünschten Anwendung besser und/oder gezielter gesteuert sowie kontrolliert werden.

Außer den vorstehend bereits beschriebenen Komponenten (A) bis (C) können die erfindungsgemäßen Beschichtungsmittelsysteme gegebenenfalls auch noch mindestens eine weitere Komponente (D) bis (J) umfassen, die nachfolgend präzisiert werden.

Die optionalen Komponenten (D) bis (J) sind ausgewählt aus hydroxylgruppenhaltigen Verbindungen (D), Aminoplastharzen und/oder Tris(Alkoxycarbonyl-amino)Triazinen (E), Lackadditiven (F), Pigmenten (H), sonstigen Füllstoffen (I) und/oder Lösungsmitteln (J).

In Analogie zu dem vorstehend beschriebenen Komponenten (A) bis (C) können auch die optionalen Komponenten (D) bis (J) getrennt voneinander vorliegen oder vollständig oder zumindest teilweise miteinander vermischt sein und/oder mit den Komponenten (A) bis (C) vermischt sein.

Vorzugsweise umfasst das erfindungsgemäße Beschichtungsmittelsystem als optionale Komponente mindestens eine weitere Komponente ausgewählt aus hydroxylgruppenhaltigen Verbindungen (D), Lackadditiven (F), Pigmenten (H) und/oder Lösungsmitteln (J).

Das erfindungsgemäße Beschichtungsmittelsystem enthält gegebenenfalls als optionale Komponente (D) mindestens eine hydroxylgruppenhaltige Verbindung. Hydroxylgruppenhaltige (hydroxygruppenhaltige) Verbindungen als solche sind dem Fachmann bekannt. Die hydroxylgruppenhaltige Verbindung (D) weist in der Regel zwei oder mehr Hydroxylgruppen auf, vorzugsweise weist sie zwei Hydroxylgruppen auf. Die hydroxylgruppenhaltige Verbindung (D) im Rahmen der vorliegenden Erfindung fällt nicht unter die Definition der vorstehend beschriebenen polyhydroxygruppenhaltigen Verbindung (A).

Vorzugsweise handelt es sich bei den hydroxygruppenhaltigen Verbindungen (D) um monomere Verbindungen und/oder um Verbindungen mit einem Molekulargewicht < 500 g/mol, vorzugsweise < 200 g/mol. Die hydroxylgruppenhaltigen Verbindungen (D) werden auch als niedermolekulare Polyole bezeichnet.

Die Komponente (D) hat, sofern vorhanden, einen Anteil von 0,5 bis 20 Gew.-%, besonders bevorzugt von 1 bis 10 Gew.-%, ganz besonders bevorzugt von 1 bis 5 Gew.-%, jeweils bezogen auf den Bindemittelgehalt des Beschichtungsmittelsystems.

Bevorzugte Beispiele für eine hydroxylgruppenhaltige Verbindung (D) sind Ethylenglykol, Neopentylglykol, 1,3-Butandiol 1,2-Propandiol oder Diole aus dimerisierten und danach hydrierten natürlichen Fettsäuren eingesetzt (Handelsname Sovermol® 908). Bevorzugt werden solche (niedermolekularen) Polyole gemäß Komponente (D) in untergeordneten Anteilen der Polyolkomponente (A) beigemischt, beispielsweise in 1 bis 20 Gew.-%, bezogen auf den Gehalt an Komponente (A).

Das erfindungsgemäße Beschichtungsmittelsystem enthält gegebenenfalls als optionale Komponente (E) mindestens ein Aminoplastharz und/oder mindestens ein Tris(alkoxycarbonylamino)Triazin. Verbindungen, die unter die Komponente (E) der vorliegenden Erfindung fallen, sind dem Fachmann bekannt. Sofern vorhanden, hat die Komponente (E) einen Anteil von 0,5 bis 30 Gew.-%, vorzugsweise von 0,5 bis 15 Gew.-%, bezogen auf den Bindemittelgehalt des Beschichtungsmittelsystems.

Beispiele für geeignete Tris(Alkoxycarbonylamino)Triazine sind in der US-A 4,939,213, der US-A 5,084,541 und der EP-A 0 624 577 genannt.

Beispiele für geeignete Aminoplastharze (E) sind alle im Bereich der Lackindustrie üblicherweise eingesetzten Aminoplastharze, wobei über die Reaktivität des Aminoplastharzes die Eigenschaften der resultierenden Beschichtungsmittel gesteuert werden können. Es handelt sich um Kondensationsprodukte aus Aldehyden, insbesondere Formaldehyd, und beispielsweise Harnstoff, Melamin, Guanamin und Benzoguanamin. Die Aminoplastharze enthalten Alkohol-, vorzugsweise Methylolgruppen, die in der Regel teilweise oder bevorzugt vollständig mit Alkoholen verethert sind. Es werden insbesondere mit niedrigen Alkoholen veretherte Aminoplastharze eingesetzt. Bevorzugt werden mit Methanol und/oder Ethanol und/oder Butanol veretherte Aminoplastharze, beispielsweise in dem Handel unter den Bezeichnungen Cymel®, Resimene®, Maprenal® und Luwipal® erhältlichen Produkte, eingesetzt.

Die Aminoplastharze (E) sind altbekannte Verbindungen und werden beispielsweise im Detail in der amerikanischen Patentanmeldung US 2005/0182189 A1, Seite 1, Absatz [0014], bis Seite 4, Absatz [0028], beschrieben.

Das erfindungsgemäße Beschichtungsmittelsystem enthält gegebenenfalls als optionale Komponente (F) mindestens ein Lackadditiv. Lackadditive als solche sind dem Fachmann bekannt. Sofern vorhanden, hat ein Lackadditiv (F) einen Anteil von 0,5 bis 30 Gew.-%, vorzugsweise von 0,5 bis 25 Gew.-% und insbesondere von 1 bis 20 Gew.-%, jeweils bezogen auf den Bindemittelgehalt des Beschichtungsmittelsystems.

### Beispiele geeigneter Lackadditive (F) sind:

- insbesondere UV-Absorber wie zum Beispiel 2-(2-Hydroxyphenyl)-Benzotriazole, 2-Hydroxy-Benzophenone, Hydroxyphenyl-s-Triazine und Oxalanilide;
- insbesondere Lichtschutzmittel wie sog. HALS-Verbindungen ("hindered amine light stabiliser"; dabei handelt es sich um Derivate des 2,2,6,6-Tetramethylpiperidin; kommerziell erhältlich beispielsweise als Tinuvin®292 der BASF SE), Benztriazole wie Hydroxyphenylalkylbenzotriazol oder Oxalanilide;
- Radikalfänger;
- Slipadditive;
- Polymerisationsinhibitoren;
- Entschäumer;
- von den Komponenten (A) und (D) verschiedene Reaktivverdünner, insbesondere Reaktivverdünner, die erst durch Reaktion mit weiteren Bestandteilen bzw. Wasser reaktiv werden, wie beispielsweise Incozol oder Asparaginsäureester
- von den Komponenten (A) und (D) verschiedene Netzmittel wie Siloxane, fluorhaltige Verbindungen, Carbonsäurehalbester, Phosphorsäureester, Polyacrylsäuren und deren Copolymere oder Polyurethane;
- Haftvermittler;
- Verlaufsmittel, insbesondere auf Basis eines Polyacrylats. Zum Einsatz kommen hier vorzugsweise Copolymere aus Ethylhexylacrylat und Ethylacrylat. Diese Copolymere habe vorzugsweise einen sehr niedrigen T_{G}-Wert, sind relativ unpolar und haben eine kleine OH-Zahl;
- filmbildende Hilfsmittel wie Cellulose-Derivate;
- Füllstoffe in Form von Nanopartikeln auf der Basis von Siliziumdioxid, Aluminiumoxid oder Zirkoniumoxid; ergänzend wird noch auf das Römpp Lexikon »Lacke und Druckfarben« Georg Thieme Verlag, Stuttgart, 1998, Seiten 250 bis 252, verwiesen;
- von den Komponenten (A) und (D) verschiedene rheologiesteuernde Additive, wie die aus den Patentschriften WO 94/22968, EP-A-0 276 501, EP-A-0 249 201 oder WO 97/12945 bekannten Additive; vernetzte polymere Mikroteilchen, wie sie beispielsweise in der EP-A-0 008 127 offenbart sind; anorganische Schichtsilikate wie Aluminium-Magnesium-Silikate, Natrium-Magnesium- und Natrium-Magnesium-Fluor-Lithium-Schichtsilikate des Montmorillonit-Typs; Kieselsäuren wie Aerosile®; oder synthetische Polymere mit ionischen und/oder assoziativ wirkenden Gruppen wie Poly(meth)acrylamid, Poly(meth)acrylsäure, Polyvinylpyrrolidon, Styrol-Maleinsäureanhydrid- oder Ethylen-Maleinsäureanhydrid-Copolymere und ihre Derivate oder hydrophob modifizierte ethoxylierte Urethane oder Polyacrylate;
- Flammschutzmittel.

Das erfindungsgemäße Beschichtungsmittelsystem enthält gegebenenfalls als optionale Komponente (H) mindestens ein Pigment. Geeignete Pigmente als solche sind dem Fachmann bekannt (siehe beispielsweise in Thomas Brock, Michael Groteklaes, Peter Mischke: European Coaatings Handbook, Vincentz Verlag, ISBN 3-86630-849-3).

Der Anteil der Pigmente kann prinzipiell beliebig sein; er liegt bevorzugt in einem P/B-Bereich von 0,1 bis 3,0 (P/B beschreibt das Gewichtsverhältnis von Pigment (P) zu Bindemittel (B); Bindemittel ist in diesem Fall als Summe aller filmbildenden Komponenten des Lacksystems zu verstehen).

Pigmente werden erfindungsgemäß insbesondere dann eingesetzt, wenn mit den Beschichtungsmittelzusammensetzungen pigmentierte Topcoats oder pigmentierte Undercoats, insbesondere pigmentierte Topcoats, hergestellt werden sollen.

Das erfindungsgemäße Beschichtungsmittelsystem enthält gegebenenfalls als optionale Komponente (I) mindestens einen sonstigen Füllstoff. Sonstige Füllstoffe als solche sind dem Fachmann bekannt. Sofern vorhanden, hat der sonstige Füllstoff (I) einen Anteil von 0,1 bis 30 Gew.-%, jeweils bezogen auf den Bindemittelgehalt des Beschichtungsmittelsystems.

Beispiele für geeignete sonstige Füllstoffe (I) sind Carbonate, Siliciumdioxide oder Bariumsulfate als solche oder auch in modifizierter Form. Im Gegensatz zu den vorstehend als Beispiele für Lackadditive (F) beschriebenen Füllstoffen sind die sonstigen Füllstoffe (I) keine nanoskaligen Partikel.

Das erfindungsgemäße Beschichtungsmittelsystem enthält gegebenenfalls als optionale Komponente (J) mindestens ein Lösungsmittel. Lösungsmittel als solche, insbesondere im Zusammenhang mit der Herstellung von Polyurethan oder von Beschichtungsmittelsystemen, sind dem Fachmann bekannt. Sofern vorhanden, hat das Lösungsmittel (J) einen Anteil von 20 bis 80 %, vorzugsweise von 30 bis 50 %, jeweils bezogen auf die Gesamtmenge des erfindungsgemäßen Beschichtungsmittelsystems.

Vorzugsweise werden solche Lösungsmittel eingesetzt, die zum Lösen der polyisocyanathaltigen Verbindungen gemäß der Komponente (A) und/oder der Komponente (B) geeignet sind.

Geeignete Lösungsmittel (J) sind solche, die eine ausreichende Löslichkeit der Polyisocyanatkomponente ermöglichen und frei von gegenüber Isocyanaten reaktiven Gruppen sind. Beispiele für solche Lösungsmittel sind Aceton, Methylethylketon, Cyclohexanon, Methylisobutylketon, Methylisoamylketon, Diisobutylketon, Ethylacetat, n-Butylacetat, Ethylenglykoldiacetat, Butyrolacton, Diethylcarbonat, Propylencarbonat, Ethylencarbonat, N,N-Dimethylformamid, N,N-Dimethylacetamid, N-Methylpyrrolidon, N-Ethylpyrrolidon, Methylal, Butylal, 1,3-Dioxolan, Glycerolformal, Benzol, Toluol, Xylol, n-Hexan, Cyclohexan, Solventnaphtha®, 2-Methoxypropylacetat (MPA), und Ethylethoxypropionat.

In einer Ausführungsform der vorliegenden Erfindung umfasst das erfindungsgemäße Beschichtungsmittelsystem mindestens eine weitere Komponente (D) bis (J), die ausgewählt ist aus hydroxylgruppenhaltigen Verbindungen (D), Aminoplastharzen und/oder Tris(Alkoxycarbonylamino)Triazinen (E), Lackadditiven (F), Pigmenten (H), sonstigen Füllstoffen (I) und/oder Lösungsmitteln (J), wobei
i) die einzelnen Komponenten (D) bis (J) getrennt voneinander vorliegen oder
ii) vollständig oder zumindest zeitweise miteinander und/oder mit den Komponenten (A) bis (C) vermischt sind.

Weiterhin ist es bevorzugt, dass
i) das Beschichtungsmittelsystem nicht wässrig ist, und/oder
ii) die Komponenten (A) und/oder (B) jeweils ein Gemisch mit mindestens einem Lösungsmittel (J) ausbilden, wobei aber die Komponenten (A) und (B) getrennt voneinander vorliegen, und/oder
iii) der Katalysator gemäß Komponente (C) ganz oder zumindest teilweise in mindestens einer der getrennt voneinander vorliegenden Komponenten (A) oder (B), vorzugsweise in Komponente (A) enthalten ist.

Sofern das Beschichtungsmittelsystem nicht wässrig ist, bedeutet dies, dass vorzugsweis gar kein Wasser im entsprechenden Beschichtungsmittelsystem enthalten ist oder dass Wasser nur in Form von Verunreinigungen oder Spuren mit einem maximalen Gehalt von 0,1 Gew.-%, vorzugsweise von 0,01 Gew.-%, insbesondere von 0,001 Gew.-%, vorkommen kann, jeweils bezogen auf das Gesamtgewicht des entsprechenden Beschichtungsmittelsystems.

In einer weiteren bevorzugten Ausführungsform liegt das erfindungsgemäße Beschichtungsmittelsystem als vollständiges Gemisch der Komponenten (A), (B) und (C) sowie der gegebenenfalls vorhandenen Komponenten (D) bis (J) vor.

In einer Ausführungsform der vorliegenden Erfindung umfasst das Beschichtungsmittelsystem die folgenden Komponenten:
- 50 bis 70 Gew.-% (bezogen auf den Bindemittelgehalt des Beschichtungsmittelsystems) von mindestens einer polyhydroxygruppenhaltigen Verbindung (A), vorzugsweise mindestens eines Poly(meth)acrylatpolyols,
- 25 bis 40 Gew.-% (bezogen auf den Bindemittelgehalt des Beschichtungsmittelsystems) von mindestens einer polyisocyanathaltigen Verbindung (B),
- 100 bis 1000 Gew.-ppm (bezogen auf den Bindemittelgehalt des Beschichtungsmittelsystems) von mindestens einem Katalysator (C),
- 0 bis 10 Gew.-%, vorzugsweise 1 bis 5 Gew.-% (bezogen auf den Bindemittelgehalt an Beschichtungsmittelsystem) von mindestens einer hydroxylgruppenhaltigen Verbindung (D),
- 0 bis 25 Gew.-%, vorzugsweise 1 bis 10 Gew.-% (bezogen auf den Bindemittelgehalt des Beschichtungsmittelsystems) von mindestens einem Lackadditiv (F), und
- 0 bis 300 Gew.-%, vorzugsweise 1 bis 100 Gew.-% (bezogen auf den Bindemittelgehalt des Beschichtungsmittelsystems) von mindestens einem Pigment (H).

Weiterhin kann in dieser Ausführungsform im erfindungsgemäßen Beschichtungsmittelsystem auch mindestens ein Lösungsmittel (J) enthalten sein. Sofern ein Lösungsmittel vorhanden ist, erfolgt dies zu Mengen von 1 bis 80 Gew.-%, vorzugsweise 5 bis 50 Gew.-% von mindestens einem Lösungsmittel (J). Im Gegensatz zu den anderen Komponenten bezieht sich der Lösungsmittelgehalt auf die Gesamtmenge des erfindungsgemäßen Beschichtungsmittelsystems.

Ein weiterer Gegenstand der vorliegenden Erfindung ist somit auch ein Verfahren zur Herstellung eines vorstehend beschriebenen Beschichtungsmittelsystems. Das Herstellungsverfahren als solches ist dem Fachmann bekannt. Wenn die zwingenden sowie gegebenenfalls die optionalen Komponenten des Beschichtungsmittelsystems vollständig oder zumindest teilweise miteinander vermischt sind, weiß der Fachmann, wie er ein solches Vermischen durchzuführen hat. Die Reihenfolge und/oder Dauer der einzelnen Vermischungsschritte sind prinzipiell beliebig, gegebenenfalls können alle Komponenten gleichzeitig miteinander vermischt werden. Sofern die zwingenden sowie gegebenenfalls vorhandenen Komponenten des erfindungsgemäßen Beschichtungsmittelsystems getrennt voneinander vorliegen, werden diese unmittelbar vor der Anwendung des entsprechenden Beschichtungsmittelsystems analog vermischt.

In einer Ausführungsform wird das erfindungsgemäße Verfahren zur Herstellung eines Beschichtungsmittelsystems so durchgeführt, dass die Komponenten (A), (B) und (C) sowie die gegebenenfalls vorhandenen Komponenten (D) und (J) getrennt voneinander bereitgestellt und anschließend miteinander vermischt werden. Vorzugsweise erfolgt das Vermischen bei Raumtemperatur, die Komponenten (A) und (C) werden vorab miteinander gemischt und/oder ein die Komponente (A) enthaltendes Gemisch zugegeben.

Die vorgenannte Ausführungsform wird vorzugsweise unmittelbar vor der konkreten Anwendung des erfindungsgemäßen Beschichtungsmittelsystems durchgeführt. Das heißt, eine vollständige Vermischung aller im erfindungsgemäßen Beschichtungsmittelsystem enthaltenen zwingenden Komponenten (A) bis (C) sowie die gegebenenfalls vorhandenen Komponenten (D) bis (J) wird erst unmittelbar vor der konkreten Anwendung des erfindungsgemäßen Beschichtungsmittelsystems erzielt. Der Begriff "unmittelbar vor der konkreten Anwendung" umfasst eine Zeitspanne von ungefähr einer Minute bis zu zwei Stunden

Ein weiterer Gegenstand der vorliegenden Erfindung ist somit auch ein Verfahren zur Herstellung eines Polyurethans durch zumindest teilweise oder vollständige Aushärtung des vorstehend beschriebenen erfindungsgemäßen Beschichtungsmittelsystems. Vorzugsweise ist das Polyurethan vollständig ausgehärtet. Die Aushärtung des erfindungsgemäßen Beschichtungsmittelsystems erfolgt nach vollständigem Vermischen sämtlicher Komponenten des Beschichtungsmittelsystems, insbesondere dem Vermischen der Komponenten (A) und (B). Sofern die Komponente (B) im Rahmen eines 1K-Systems noch mit Blockierungsmitteln geschützt (blockiert) sein sollte, muss das Blockierungsmittel zunächst entfernt werden, bevor eine Urethanreaktion unter Herstellung des erfindungsgemäßen Polyurethans stattfinden kann. Das Verfahren zur Herstellung des Polyurethans erfolgt somit vorzugsweise im Rahmen einer konkreten Anwendung des erfindungsgemäßen Beschichtungsmittelsystems. Die Herstellung eines Polyurethans als solches bzw. die Durchführung der Aushärtung ist dem Fachmann bekannt und auch in der Einleitung der vorliegenden Erfindung bereits gewürdigt worden.

In anderen Worten ausgedrückt bedeutet dies, dass durch die gewünschte/konkrete Anwendung (Applikation) des erfindungsgemäßen Beschichtungsmittelsystems Polyurethan durch Aushärtung eines auf den Komponenten (A) und (B) basierenden Beschichtungsmittels in Gegenwart des Katalysators (C) ausgebildet wird, vorzugsweise erfolgt die Polyurethanausbildung in Schichtform oder als Beschichtung.

Die Aushärtung der (des) applizierten erfindungsgemäßen Beschichtungsmittel(systems) kann aber auch nach einer gewissen Ruhezeit erfolgen. Die Ruhezeit dient beispielsweise zum Verlauf und zur Entgasung der Lackschichten oder zum Verdunsten von flüchtigen Bestandteilen wie Lösemittel. Die Ruhezeit kann durch die Anwendung erhöhter Temperaturen und/oder durch eine reduzierte Luftfeuchte unterstützt und/oder verkürzt werden, sofern hierbei keine Schädigungen oder Veränderungen der Lackschichten eintreten, etwa eine vorzeitige vollständige Vernetzung.

Die thermische Härtung des Beschichtungsmittelsystems weist keine methodischen Besonderheiten auf, sondern kann nach den üblichen und bekannten Methoden wie Erhitzen in einem Umluftofen oder Bestrahlen mit IR-Lampen erfolgen. Hierbei kann die thermische Härtung auch stufenweise erfolgen. Eine weitere bevorzugte Härtungsmethode ist die Härtung mit nahem Infrarot (NIR-Strahlung).

Vorteilhafterweise erfolgt die thermische Härtung bei einer Temperatur von 20 bis 200 °C während einer Zeit von 1 min bis zu 10 h, wobei bei niedrigen Temperaturen auch längere Härtezeiten zur Anwendung kommen können. Für die Automobilreparaturlackierung und für die Lackierung von Kunststoffteilen sowie die Lackierung von Nutzfahrzeugen werden dabei üblicherweise niedrigere Temperaturen angewandt, die bevorzugt zwischen 20 und 80 °C, insbesondere zwischen 20 und 60 °C liegen.

Vorzugsweise bildet das nach dem erfindungsgemäßen Verfahren hergestellte Polyurethan eine Schicht oder Beschichtung aus oder ist zumindest Bestandteil einer Schicht oder Beschichtung, vorzugsweise ist die Schicht oder Beschichtung eine Lackschicht.

Vorzugsweise enthält das Polyurethan mindestens ein Pigment (H) und/oder das Polyurethan ist auf einer Basislackschicht, die gegebenenfalls mindestens ein Pigment (H) enthält, oder auf einem gegebenenfalls vorbeschichteten Substrat schichtförmig aufgebracht.

Weiterhin ist es bevorzugt, dass die Aushärtung des Polyurethans bei Temperaturen von 20 bis 80 °C, vorzugsweise von 20 bis 60 °C erfolgt, wobei gegebenenfalls die optionale Basislackschicht zuvor bei Temperaturen von 20 °C bis 80 °C getrocknet wurde.

Ein weiterer Gegenstand der vorliegenden Erfindung ist somit auch Polyurethan, das nach dem vorstehend beschriebenen Verfahren hergestellt wurde.

Ein weiterer Gegenstand der vorliegenden Erfindung ist somit auch die Verwendung des vorstehend beschriebenen erfindungsgemäßen Beschichtungsmittelsystems und/oder des nach einem vorstehend beschriebenen Verfahren hergestellten erfindungsgemäßen Polyurethans als Lack, bei der Automobillackierung, zur Reparatur von Lacken, zur Automobilreparaturlackierung und/oder zur Beschichtung von Automobilanbauteilen, von Kunststoffsubstraten oder von Nutzfahrzeugen, vorzugsweise ist der Lack ein Klarlack oder in pigmentierter Lack.

Da die aus den erfindungsgemäßen Beschichtungsmittelsystemen hergestellten erfindungsgemäßen Beschichtungen auch auf bereits ausgehärteten Elektrotauchlackierungen, Füllerlackierungen, Basislackierungen oder üblichen und bekannten Klarlackierungen hervorragend haften, eignen sie sich neben dem Einsatz in der Automobilserien(OEM)Lackierung ausgezeichnet für die Autoreparaturlackierung und/oder für die Beschichtung von Automobilanbauteilen und/oder die Beschichtung von Nutzfahrzeugen.

Die Applikation der erfindungsgemäßen Beschichtungsmittelsysteme kann durch alle üblichen Applikationsmethoden wie zum Beispiel Spritzen, Rakeln, Streichen, Gießen, Tauchen, Tränken, Träufeln oder Walzen erfolgen. Dabei kann das zu beschichtende Substrat als solches ruhen, wobei die Applikationseinrichtung oder -anlage bewegt wird. Indes kann auch das zu beschichtende Substrat, insbesondere ein Coil, bewegt werden, wobei die Applikationsanlage relativ zum Substrat ruht oder in geeigneter Weise bewegt wird.

Vorzugsweise werden Spritzapplikationsmethoden angewandt, wie zum Beispiel Druckluftspritzen, Airless-Spritzen, Hochrotation, elektrostatischer Sprühauftrag (ESTA), gegebenenfalls verbunden mit Heißspritzapplikation wie zum Beispiel Hot-Air-Heißspritzen.

Die erfindungsgemäßen Beschichtungsmittel eignen sich hervorragend als dekorative, schützende und/oder effektgebende Beschichtungen und Lackierungen von Karosserien von Fortbewegungsmitteln (insbesondere Kraftfahrzeuge, wie Fahrräder, Motorräder, Busse, LKW oder PKW) oder von Teilen hiervon; von Bauwerken im Innen- und Außenbereich; von Möbeln, Fenstern und Türen; von Kunststoffformteilen, insbesondere CDs und Fenster; von industriellen Kleinteilen, von Coils, Containern und Emballagen; von weißer Ware; von Folien; von optischen, elektrotechnischen und mechanische Bauteilen sowie von Glashohlkörpern und Gegenständen des täglichen Bedarfs.

Die erfindungsgemäßen Beschichtungsmittelsysteme können daher beispielsweise auf ein gegebenenfalls vorbeschichtetes Substrat aufgebracht werden, wobei die erfindungsgemäßen Beschichtungsmittel sowohl pigmentiert als auch unpigmentiert sein können. Insbesondere werden die erfindungsgemäßen Beschichtungsmittelsysteme und Lackierungen, insbesondere die Klarlackierungen, in dem technologisch und ästhetisch besonders anspruchsvollen Gebiet der Automobilserienlackierung (OEM) und zur Beschichtung von Kunststoffanbauteilen für Pkw-Karosserien, insbesondere für Karosserien von Pkw der Oberklasse, wie zum Beispiel für die Herstellung von Dächern, Heckklappen, Motorhauben, Kotflügeln, Stoßstangen, Spoilern, Schwellern, Schutzleisten, seitlichen Verkleidungen u. Ä., sowie der Automobilreparaturlackierung und der Lackierung von Nutzfahrzeugen, wie beispielsweise von Lastkraftfahrzeugen, kettenbetriebenen Baufahrzeugen, wie zum Beispiel Kranfahrzeugen, Radladern und Betonmischern, Omnibussen, Schienenfahrzeugen, Wasserfahrzeugen, Fluggeräten sowie landwirtschaftlichen Geräten wie Traktoren und Mähdreschern, und Teilen hiervon eingesetzt.

Die Kunststoffteile bestehen üblicherweise aus ASA, Polycarbonaten, Blends aus ASA und Polycarbonaten, Polypropylen, Polymethylmethacrylaten oder schlagzäh modifizierten Polymethylmethacrylaten, insbesondere aus Blends aus ASA und Polycarbonaten, bevorzugt mit einem Polycarbonatanteil > 40%, insbesondere > 50%.

Unter "ASA" werden dabei im Allgemeinen schlagzähmodifizierte Styrol/Acrylnitril-Polymerisate verstanden, bei denen Pfropfcopolymerisate von vinylaromatischen Verbindungen, insbesondere Styrol, und von Vinylcyaniden, insbesondere Acrylnitril, auf Polyalkylacrylatkautschuken in einer Copolymermatrix aus insbesondere Styrol und Acrylnitril, vorliegen.

Besonders bevorzugt werden die erfindungsgemäßen Beschichtungsmittelsysteme in mehrstufigen Beschichtungsverfahren eingesetzt, insbesondere bei Verfahren, bei dem auf ein gegebenenfalls vorbeschichtetes Substrat zunächst eine pigmentierte Basislackschicht und danach eine Schicht mit der erfindungsgemäßen Beschichtungsmittelzusammensetzung aufgetragen werden. Gegenstand der Erfindung sind daher auch effekt- und/oder farbgebende Mehrschichtlackierungen aus mindestens einer pigmentierten Basislackschicht und mindestens einer darauf angeordneten Klarlackschicht, die dadurch gekennzeichnet sind, dass die Klarlackschicht aus der erfindungsgemäßen Beschichtungsmittelzusammensetzung hergestellt worden ist.

Es können sowohl wasserverdünnbare Basislacke als auch Basislacke auf Basis von organischen Lösemitteln eingesetzt werden. Geeignete Basislacke sind beispielsweise in der EP-A 0 692 007 und in den dort in Spalte 3, Zeilen 50 ff. angeführten Dokumenten beschrieben. Bevorzugt wird der aufgebrachte Basislack zunächst getrocknet, das heißt dem Basislackfilm wird in einer Abdunstphase wenigstens ein Teil des organischen Lösemittels beziehungsweise des Wassers entzogen. Die Trocknung erfolgt vorzugsweise bei Temperaturen von Raumtemperatur bis 80 °C. Nach der Trocknung wird die erfindungsgemäße Beschichtungsmittelzusammensetzung aufgebracht. Anschließend wird die Zweischichtlackierung bevorzugt unter bei der Automobilserienlackierung angewandten Bedingungen bei Temperaturen von 20 bis 200 °C während einer Zeit von 1 min bis zu 10 h eingebrannt, wobei bei den für die Automobilreparaturlackierung angewandten Temperaturen, die im Allgemeinen zwischen 20 und 80 °C, insbesondere zwischen 20 und 60 °C liegen, auch längere Härtzeiten zur Anwendung kommen können.

In einer weiteren bevorzugten Ausführungsform der Erfindung wird das erfindungsgemäße Beschichtungsmittelsystem als transparenter Klarlack zur Beschichtung von Kunststoffsubstraten, insbesondere von Kunststoffanbauteilen, eingesetzt. Die Kunststoffanbauteile werden bevorzugt ebenfalls in einem mehrstufigen Beschichtungsverfahren beschichtet, bei dem auf ein gegebenenfalls vorbeschichtetes oder ein zur besseren Haftung der nachfolgenden Beschichtungen vorbehandeltes Substrat (zum Beispiel Beflammen, Corona- oder Plasma-Behandlung des Substrats) zunächst eine pigmentierte Basislackschicht und danach eine Schicht mit der erfindungsgemäßen Beschichtungsmittelzusammensetzung aufgetragen werden.

Ein weiterer Gegenstand der vorliegenden Erfindung ist somit auch ein Verfahren zur Erzeugung einer Beschichtung, wobei auf ein gegebenenfalls vorbeschichtetes Substrat oder auf eine Basislackschicht mindestens ein erfindungsgemäßes Beschichtungsmittelsystem aufgebracht wird.

Vorzugsweise umfasst die Beschichtung (Schicht) ein Polyurethan, das durch zumindest teilweises oder vollständiges Aushärten, vorzugsweise durch vollständiges Aushärten des Beschichtungsmittelsystems erhalten wird.
Ein weiterer Gegenstand der vorliegenden Erfindung ist somit auch eine Beschichtung (oder Schicht), die nach dem vorstehend beschriebenen Verfahren zur Erzeugung der Beschichtung erhältlich ist.
Ein weiterer Gegenstand der vorliegenden Erfindung ist somit auch die Verwendung eines Katalysators, der als Metallkomponenten Lithium (Li) und Bismut (Bi) enthält und wobei das molare Verhältnis von Lithium zu Bismut mindestens 7 : 1 [mol/mol] beträgt, in einem vorstehend beschriebenen erfindungsgemäßen Beschichtungsmittelsystem, zur Katalyse der Urethanreaktion in einem Beschichtungsmittelsystem, zur Herstellung von Polyurethanen, zur Herstellung eines Polyurethans gemäß den vorstehenden Ausführungen, zur Herstellung einer Beschichtung gemäß den vorstehenden Ausführungen, zur Herstellung eines Lacks, zur Automobilreparaturlackierung, und/oder zur Beschichtung von Automobilbauteilen, von Kunststoffsubstraten oder von Nutzfahrzeugen.

Nachfolgend wird die Erfindung anhand von Beispielen verdeutlicht.

### 1. Komponente A

### Herstellung eines erfindungsgemäßen Polyacrylatpolyols

In einem 4l-Edelstahlreaktor in Druckausführung, ausgestattet mit zwei Zulaufgefäßen, einem Rückflusskühler und einem Rührorgan, werden 487 g Butylacetat vorgelegt. In einem der Zulaufgefäße wird eine Mischung aus 479 g Styrol, 242,2 g Methylmethacrylat, 164 g n-Butylacrylat, 298 g Butylmethacrylat, 33,4g Methacrylsäure sowie 763 g Hydroxypropylmethacrylat vorgelegt. In dem zweiten Zulaufgefäß werden 198 g tert-butyl-per-2-ethylhexanoat mit 86 g Butylacetat vorgelegt. Bei einem Druck von 3 bar absolut wird die Reaktorvorlage auf 140 °C aufgeheizt. Bei Erreichen der Temperatur wird der Initiatorzulauf gestartet, die Gesamtzulaufzeit beträgt 270 Minuten. 5 Minuten nach dem Start des Initiatorvorlaufes wird der Monomerenzulauf gestartet, dessen Zulaufzeit beträgt 240 Minuten. Nach Beendigung beider Zuläufe wird noch für 60 Minuten bei 140 °C gehalten, danach wird heruntergekühlt und entspannt. Mit Methylethylketon wird der Festkörper der Harzlösung auf 65 % ± 1 % eingestellt.

Das so synthetisierte Polyacrylatpolyol (in Form eines Festharzes) weist eine Säurezahl von 14,1 mg KOH/g Festharz sowie einen Festkörper von 64,0 % auf. Die Viskosität der Harzlösung liegt bei 3483 mPas, gemessen mit einem Rotationsviskosimeter (Brookfield CAP 2000, Spindel 3, 2500 s⁻¹).Die OH-Zahl errechnet sich zu 150 mg KOH/g (Festharz). Das Molekulargewicht des Harzes liegt bei Mn = 2608 D bzw. Mw = 5990 D (bestimmt mittels GPC / siehe unten).

Der Festkörper (Feststoffgehalt) wird folgendermaßen gemessen: Auf einem Blechdeckel mit einem Durchmesser von ca. 6 - 8 cm wird eine Polyacrylatpolyolprobe in Festharzform auf eine Analysenwaage in einer Menge von 1g aufgebracht. Nach Zugabe von 1ml eines geeigneten Lösungsmittels (Butylacetat) wird das Blech in einem Umluftofen bei 130°C für 60 Minuten getrocknet. Der verbleibende Rückstand stellt den Feststoffgehalt des Polyacrylatpolyols in Festharzform dar. Es wird jeweils eine Doppelbestimmung vorgenommen.

Die Gelpermeationschromatographie (GPC) wird bei 40 °C mit einer Hochdruckflüssigkeitschromatographie-Pumpe und einem Brechungsindexdetektor durchgeführt. Als Elutionsmittel wird Tetrahydrofuran mit einer Elutionsgeschwindigkeit von 1 ml/min verwendet. Die Kalibrierung wird mittels eines Poly-MMA Standards durchgeführt. Das zahlenmittlere Molekulargewicht Mn, das gewichtsmittlere Molekulargewicht Mw und Mp werden bestimmt, wobei sich der Polymolekularitätsindex Mp berechnet aus Mp = Mw/Mn.

### 2. Härterlösung, entsprechend Komponente B

Eine Mischung von 95 Teilen HMDI-trimer (NCO Gehalt 23,5 ± 0.5 %) mit 5 Teilen eines IPDI-trimers (NCO Gehalt 11,9 ± 0,4%) wird in einer Mischung aus Butylacetat und Xylol (1 : 1) auf 85 % Festkörpergehalt angelöst.

### 3. Verdünnung

### 1 : 1 Mischung aus Xylol/Butylacetat (Lösungsmittel)

### 4. Katalysator (Komponente C)

Die in der Tabelle 2 (siehe Ziffer 7) angegebenen Metallgehalte werden durch einzelne Zugabe von
i) einer Bi-octoatlösung in Octansäure (2-ethylhexansäure) mit einem Metallgehalt von 25% Bi
ii) eine Li-octoatlösung in Octansäure (2-ethylhexansäure) mit einem Metallgehalt von 2% Li
zur Komponente A erreicht.

### 5. Lackrezept

**Tabelle 1**

| | | V1 | E1 | E2 | V2 | E3 | E4 | V3 |
|---|---|---|---|---|---|---|---|---|
| 1 | Komponente A | 85,1 | 85,1 | 85,1 | 85,1 | 85,1 | 85,1 | 85,1 |
| 2 | Ethylethoxypropionat | 8,75 | 8,75 | 8,75 | 8,75 | 8,75 | 8,75 | 8,75 |
| 3 | Tinuvin® 292 BASF SE | 0,9 | 0,9 | 0,9 | 0,9 | 0,9 | 0,9 | 0,9 |
| 4 | Hydroxyphenylalkylbenzotriazol | 1,3 | 1,3 | 1,3 | 1,3 | 1,3 | 1,3 | 1,3 |
| 5 | Bi-Octoat 25% Bi | 0,251 | 0,251 | 0,251 | 0,418 | 0,418 | 0,418 | 0,418 |
| 7 | Lithiumoctoat 2%Li | 0,693 | 0,788 | 1,05 | 1,155 | 1,312 | 1,75 | 0 |
| 9 | Komponente B | 32 | 32 | 32 | 32 | 32 | 32 | 32 |
| 10 | Verdünnung | 32 | 32 | 32 | 32 | 32 | 32 | 32 |

Die Angabe der Konzentrationen sind Absolutmengen (in Teilen ausgedrückt) bezogen auf die gesamte Lackformulierung.

### Herstellung der Lacke

Zur Herstellung der Lacke werden die Positionen 1 - 4 zusammen eingewogen und homogen vermischt. Die Katalysatorlösungen werden direkt vor Versuchsbeginn einzeln zugegeben und jeweils unter Rühren homogen vermischt. Komponente B und Verdünnung werden dann ebenfalls zugegeben und homogen eingerührt. Der Lackfilm wird dann innerhalb von maximal 30 Minuten nach Vermischen der Komponenten erzeugt (siehe Ziffer 7). Ethylethoxypropionat ist ein Lösungsmittel, Tinuvin® 292 sowie Hydroxyphenylalkylbenzotriazol sind Lichtschutzmittel.

### 6. Print-Test (Bestimmung der Aushärtungszeit)

Der Lackfilm wird mittels 100 µm-Rakel auf eine Glastafel aufgezogen. Nach Trocknung über 18 Minuten bei 60 °C wird innerhalb von 10 Minuten nach Entnahme aus dem Ofen die Glastafel auf eine handelsüblichen Laborwaage aufgelegt. Mittels Daumendruck wird der Film dann für 20 s mit einem Gewicht von 2 kg belastet. Diese Prüfung wird alle 20 Minuten wiederholt. Bei offensichtlich noch weichem oder klebrigem Lackfilm wird zunächst abgewartet, bis der Lackfilm eine ausreichende Klebfreiheit und Härte erreicht hat. Die gesamte Versuchsdauer beträgt ca 6 Stunden. Ist danach noch eine Markierung zu erkennen, wird dieses mit"> 360 min" bewertet.

Die Auswertung der Versuche wird nach einer Lagerzeit von 24 Stunden vorgenommen. Dazu wird die Lackoberfläche mit einer wässrigen Tensidlösung (handelsübliches Spülmittel) und einem weichen Tuch abgewaschen, um Fettmarkierungen zu eliminieren. Es wird immer gegen einen Standard gemessen. Der Lack wird als in Ordnung angesehen, wenn kein Daumenabdruck auf dem Lackfilm sichtbar ist. Die Ergebnisse der Versuche sind in Tabelle 2 wiedergegeben. Diese Prüfung ist ein Maß für die Montagefestigkeit von Reparaturlackierungen, das heißt je früher der Lackfilm seine Montagefestigkeit nach forcierter Trocknung erreicht hat, umso eher kann mit Montagearbeiten (bzw. Demontagearbeiten von Abklebungen) an der reparierten Karosserie begonnen werden.

### 7. Ergebnisse

**Tabelle 2**

| Verwendung von Katalysatoren, die als Metallkomponenten Lithium und Bismut enthalten, E1 bis E4 sind erfindungsgemäß, V1 bis V3 sind Vergleichsbeispiele. | | | | | | | |
|---|---|---|---|---|---|---|---|
| | V1 | E1 | E2 | V2 | E3 | E4 | V3 |
| Bi [mmol] | 0,3 | 0,3 | 0,3 | 0,5 | 0,5 | 0,5 | 0,5 |
| Li [mmol] | 1,98 | 2,25 | 3,0 | 3,3 | 3,75 | 5,0 | 0 |
| Verhältnis Bi/Li (molar) | 1/6,6 | 1/7,5 | 1/10 | 1/6,6 | 1/7,5 | 1/10 | -- |
| Print-Test 18'60°C [min] | > 360 | 240 | 220 | 320 | 280 | 260 | >360 |

Die Beispiele gemäß Tabelle 2 zeigen, dass die erfindungsgemäßen Beschichtungsmittel mit einem Katalysator, bei dem das molare Verhältnis von Lithium zu Bismut mindestens 7 : 1 [mol/mol] beträgt, deutlich kürzere Aushärtungzeiten aufweisen als Beschichtungsmittelsysteme unter Verwendung von Katalysatoren, die dieses Verhältnis nicht aufweisen.

## Patentansprüche

1. Beschichtungsmittelsystem umfassend die Komponenten (A) bis (C) mit
(A) mindestens einer polyhydroxygruppenhaltigen Verbindung,
(B) mindestens einer polyisocyanathaltigen Verbindung und
(C) mindestens einem Katalysator, der als Metallkomponenten Lithium (Li) und Bismut (Bi) enthält und wobei das molare Verhältnis von Lithium zu Bismut mindestens 7 : 1 [mol/mol] beträgt,
wobei
i) die Komponenten (A), (B) und (C) getrennt voneinander vorliegen oder
ii) vollständig oder zumindest teilweise miteinander vermischt sind.

2. Beschichtungsmittelsystem gemäß Anspruch 1, **dadurch gekennzeichnet, dass** der Katalysator gemäß Komponente (C)
i) ein molares Verhältnis von Lithium zu Bismut von 7,5 : 1 bis 12 : 1 [mol/mol], insbesondere von 8 : 1 bis 10 : 1 [mol/mol], aufweist, und/oder
ii) mindestens eine weitere Metallkomponente, vorzugsweise Zink (Zn), aufweist.

3. Beschichtungsmittelsystem gemäß Anspruch 1 oder 2, **dadurch gekennzeichnet, dass** im Beschichtungsmittelsystem
i) die polyhydroxygruppenhaltige Verbindung gemäß der Komponente (A) ausgewählt ist aus der Gruppe der Polyacrylatpolyole, der Polymethacrylatpolyole, der Polyesterpolyole, der Polyurethanpolyole und/oder der Polysiloxanpolyole, insbesondere aus der Gruppe der Polyacrylatpolyole und/oder der Polymethacrylatpolyole, und/oder
ii) die polyisocyanathaltige Verbindung gemäß Komponente (B) ausgewählt ist aus 1,6-Hexamethylendiisocyanat, Isophorondiisocyanat, 4,4'-Methylendicyclohexyldiisocyanat, den Biuret-Dimeren der vorgenannten Diisocyanate, den Iminooxadiazindionen der vorgenannten Diisocyanate und/oder den asymmetrischen Trimeren der vorgenannten Diisocyanate.

4. Beschichtungsmittelsystem gemäß einem der Ansprüche 1 bis 3, **dadurch gekennzeichnet, dass** die Säurezahl der polyhydroxygruppenhaltigen Verbindung gemäß Komponente (A) nicht mehr als 9 mg KOH/g der entsprechenden polyhydroxygruppenhaltigen Verbindung, vorzugsweise nicht mehr als 7 mg KOH/g der entsprechenden polyhydroxygruppenhaltigen Verbindung, insbesondere 0,5 bis 5 mg KOH/g der entsprechenden polyhydroxygruppenhaltigen Verbindung, beträgt.

5. Beschichtungsmittelsystem gemäß einem der Ansprüche 1 bis 4, **dadurch gekennzeichnet, dass** das Beschichtungsmittelsystem mindestens eine weitere Komponente (D) bis (J) umfasst, die ausgewählt ist aus hydroxylgruppenhaltigen Verbindungen (D), Aminoplastharzen und/oder Tris(Alkoxycarbonylamino)Triazinen (E), Lackadditiven (F), Pigmenten (H), sonstigen Füllstoffen (I) und/oder Lösungsmitteln (J),
wobei
i) die einzelnen Komponenten (D) bis (J) getrennt voneinander vorliegen oder
ii) vollständig oder zumindest teilweise miteinander und/oder mit den Komponenten (A) bis (C) vermischt sind,
vorzugsweise umfasst das Beschichtungsmittelsystem mindestens eine weitere Komponente ausgewählt aus hydroxylgruppenhaltigen Verbindungen (D), Lackadditiven (F), Pigmenten (H) und/oder Lösungsmitteln (J).

6. Beschichtungsmittelsystem gemäß einem der Ansprüche 1 bis 5, **dadurch gekennzeichnet, dass**
i) das Beschichtungsmittelsystem nicht wässrig ist, und/oder
ii) die Komponenten (A) und/oder (B) jeweils ein Gemisch mit mindestens einem Lösungsmittel (J) ausbilden, wobei aber die Komponenten (A) und (B) getrennt voneinander vorliegen, und/oder
iii) der Katalysator gemäß Komponente (C) ganz oder zumindest teilweise in mindestens einer der getrennt voneinander vorliegenden Komponenten (A) oder (B), vorzugsweise in Komponente (A), enthalten ist.

7. Beschichtungsmittelsystem gemäß einem der Ansprüche 1 bis 6, **dadurch gekennzeichnet, dass** der Katalysator gemäß Komponente (C) als Salz vorliegt, vorzugsweise als Li-Salz und/oder Bi-Salz mit C₆-C₁₈-Carbonsäuren als Anionenkomponente des jeweiligen Salzes, insbesondere als Bi-octoat, Li-octoat, Li- oder Bi-Salz der C₁₀-Neodekansäure und/oder Li- oder Bi-Salz der C₉-Neononansäure.

8. Beschichtungsmittelsystem gemäß einem der Ansprüche 1 bis 7, **dadurch gekennzeichnet, dass** das Beschichtungsmittelsystem als vollständiges Gemisch der Komponenten (A), (B) und (C) sowie der gegebenenfalls vorhandenen Komponenten (D) bis (J) vorliegt.

9. Verfahren zur Herstellung eines Beschichtungsmittelsystems gemäß Anspruch 8, **dadurch gekennzeichnet, dass** die Komponenten (A), (B) und (C) sowie die gegebenenfalls vorhandenen Komponenten (D) bis (J) getrennt voneinander bereitgestellt und anschließend miteinander vermischt werden,
vorzugsweise erfolgt das Vermischen bei Raumtemperatur, die Komponenten (A) und (C) werden vorab miteinander gemischt und/oder die Komponente (B) wird in die Komponente (A) oder ein die Komponente (A) enthaltendes Gemisch zugegeben.

10. Verfahren zur Herstellung eines Polyurethans durch zumindest teilweise oder vollständige Aushärtung, vorzugsweise durch vollständige Aushärtung des Beschichtungsmittelsystems gemäß Anspruch 8.

11. Verfahren gemäß Anspruch 10, **dadurch gekennzeichnet, dass** das Polyurethan eine Schicht oder Beschichtung ausbildet oder zumindest Bestandteil einer Schicht oder Beschichtung ist, vorzugsweise ist die Schicht oder Beschichtung eine Lackschicht.

12. Verfahren gemäß Anspruch 10 oder 11, **dadurch gekennzeichnet, dass** das Polyurethan mindestens ein Pigment (H) enthält und/oder dass das Polyurethan auf einer Basislackschicht, die gegebenenfalls mindestens ein Pigment (H) enthält, oder auf einem gegebenenfalls vorbeschichteten Substrat schichtförmig aufgebracht ist.

13. Verfahren gemäß einem der Ansprüche 10 bis 12, **dadurch gekennzeichnet, dass** die Aushärtung des Polyurethans bei Temperaturen von 20 bis 80 °C, vorzugsweise von 20 bis 60 °C, erfolgt, wobei gegebenenfalls die optionale Basislackschicht zuvor bei Temperaturen von 20 °C bis 80 °C getrocknet wurde.

14. Verwendung eines Beschichtungsmittelsystems gemäß einem der Ansprüche 1 bis 8 oder eines Polyurethans, das nach einem Verfahren gemäß einem der Ansprüche 10 bis 13 hergestellt wurde, als Lack, bei der Automobillackierung, zur Reparatur von Lacken, zur Automobilreparaturlackierung und/oder zur Beschichtung von Automobilanbauteilen, von Kunststoffsubstraten oder von Nutzfahrzeugen, vorzugsweise ist der Lack ein Klarlack oder ein pigmentierter Lack.

15. Verfahren zur Erzeugung einer Beschichtung, **dadurch gekennzeichnet, dass** auf ein gegebenenfalls vorbeschichtetes Substrat oder auf eine Basislackschicht mindestens ein Beschichtungsmittelsystem gemäß einem der Ansprüche 1 bis 8 aufgebracht wird.

16. Verfahren gemäß Anspruch 15, **dadurch gekennzeichnet, dass** die Beschichtung ein Polyurethan umfasst, das durch zumindest teilweises oder vollständiges Aushärten, vorzugsweise durch vollständiges Aushärten des Beschichtungsmittelsystems erhalten wird.

17. Verwendung eines Katalysators (C), der als Metallkomponenten Lithium (Li) und Bismut (Bi) enthält und wobei das molare Verhältnis von Lithium zu Bismut mindestens 7: 1 [mol/mol] beträgt, in einem Beschichtungsmittelsystem gemäß einem der Ansprüche 1 bis 8, das neben dem Katalysator (C) auch die Komponenten (A) und (B) umfasst mit (A), mindestens einer polyhydroxygruppenhaltigen Verbindung und (B), mindestens einer polyisocyanathaltigen Verbindung, zur Katalyse der Urethanreaktion in einem Beschichtungsmittelsystem, zur Herstellung von Polyurethanen, zur Herstellung eines Polyurethans gemäß einem der Ansprüche 10 bis 13, zur Herstellung eines Lacks, zur Reparatur eines Lacks, zur Automobilreparaturlackierung und/oder zur Beschichtung von Automobilanbauteilen, von Kunststoffsubstraten oder von Nutzfahrzeugen.

## Claims

1. Coating material system comprising components (A) to (C) :
(A) at least one polyhydroxy group-containing compound,
(B) at least one polyisocyanate-containing compound, and
(C) at least one catalyst which comprises lithium (Li) and bismuth (Bi) as metal components and where the molar ratio of lithium to bismuth is at least 7:1 [mol/mol],
where
i) components (A), (B), and (C) are present separately from one another or
ii) are mixed wholly or at least partly with one another.

2. Coating material system according to Claim 1, **characterized in that** the catalyst of component (C) has
i) a molar ratio of lithium to bismuth of 7.5 : 1 to 12 : 1 [mol/mol], more particularly of 8 : 1 to 10 : 1 [mol/mol], and/or
ii) at least one further metal component, preferably zinc (Zn).

3. Coating material system according to Claim 1 or 2, **characterized in that**
i) the polyhydroxy group-containing compound of component (A) is selected from the group of the polyacrylate polyols, the polymethacrylate polyols, the polyester polyols, the polyurethane polyols and/or the polysiloxane polyols, more particularly from the group of the polyacrylate polyols and/or the polymethacrylate polyols, and/or
ii) the polyisocyanate-containing compound of component (B) is selected from 1,6-hexamethylene diisocyanate, isophorone diisocyanate, 4,4'-methylene dicyclohexyl diisocyanate, the biuret dimers of the aforesaid diisocyanates, the iminooxadiazinediones of the aforesaid diisocyanates and/or the asymmetrical trimers of the aforesaid diisocyanates
in the coating material system.

4. Coating material system according to any of Claims 1 to 3, **characterized in that** the acid number of the polyhydroxy group-containing compound of component (A) is not more than 9 mg KOH/g of the corresponding polyhydroxy group-containing compound, preferably not more than 7 mg KOH/g of the corresponding polyhydroxy group-containing compound, more particularly 0.5 to 5 mg KOH/g of the corresponding polyhydroxy group-containing compound.

5. Coating material system according to any of Claims 1 to 4, **characterized in that** the coating material system comprises at least one further component (D) to (J), selected from hydroxyl group-containing compounds (D), aminoplast resins and/or tris(alkoxycarbonylamino)triazines (E), coating additives (F), pigments (H), other fillers (I) and/or solvents (J),
where
i) the individual components (D) to (J) are present separately from one another or
ii) are mixed wholly or at least partly with one another and/or with components (A) to (C),
the coating material system preferably comprising at least one further component selected from hydroxyl group-containing compounds (D), coating additives (F), pigments (H) and/or solvents (J).

6. Coating material system according to any of Claims 1 to 5, **characterized in that**
i) the coating material system is not aqueous, and/or
ii) components (A) and/or (B) each form a mixture with at least one solvent (J), but components (A) and (B) are present separately from one another, and/or
iii) the catalyst of component (C) is present entirely or at least partly in at least one of the components (A) or (B) present separately from one another, preferably in component (A).

7. Coating material system according to any of Claims 1 to 6, **characterized in that** the catalyst of component (C) is present in the form of a salt, preferably an Li salt and/or Bi salt with C6-C18 carboxylic acids as anion component of the respective salt, more particularly as Bi octoate, Li octoate, Li or Bi salt of C10 neodecanoic acid and/or Li or Bi salt of C9 neononanoic acid.

8. Coating material system according to any of Claims 1 to 7, **characterized in that** the coating material system is present as a complete mixture of components (A), (B), and (C) and also of optionally present components (D) to (J).

9. Method for producing a coating material system according to Claim 8, **characterized in that** components (A), (B), and (C) and also optionally present components (D) to (J) are provided separately from one another and subsequently mixed with one another,
the mixing taking place preferably at room temperature, with components (A) and (C) being mixed with one another beforehand and/or component (B) being added to component (A) or to a mixture comprising component (A).

10. Method for producing a polyurethane by at least partial or complete curing, preferably by complete curing, of the coating material system according to Claim 8.

11. Method according to Claim 10, **characterized in that** the polyurethane forms a layer or coating or is at least part of a layer or coating, the layer or coating preferably being a coating-material film.

12. Method according to Claim 10 or 11, **characterized in that** the polyurethane comprises at least one pigment (H) and/or **in that** the polyurethane is applied in layer form to a basecoat film which optionally comprises at least one pigment (H), or to an optionally precoated substrate.

13. Method according to any of Claims 10 to 12, **characterized in that** the curing of the polyurethane takes place at temperatures of 20 to 80°C, preferably of 20 to 60°C, the optional basecoat film having optionally been dried beforehand at temperatures of 20°C to 80°C.

14. Use of a coating system according to any of Claims 1 to 8, or of a polyurethane which has been produced in accordance with a method according to any of Claims 10 to 13, as coating material, in automotive finishing, for the repair of finishes, for automotive refinishing and/or for the coating of parts for installation in or on automobiles, of plastics substrates, or of commercial vehicles, the coating material preferably being a clearcoat or a pigmented paint.

15. Method for producing a coating, **characterized in that** at least one coating material system according to any of Claims 1 to 8 is applied to an optionally precoated substrate or to a basecoat film.

16. Method according to Claim 15, **characterized in that** the coating comprises a polyurethane which is obtained by at least partial or complete curing, preferably by complete curing, of the coating material system.

17. Use of a catalyst which comprises lithium (Li) and bismuth (Bi) as metal components and where the molar ratio of lithium to bismuth is at least 7:1 [mol/mol], in a coating material system according to any of Claims 1 to 8, which in addition to catalyst (C) also comprises components (A) and (B) with (A), at least one polyhydroxy group-containing compound and (B), at least one polyisocyanate-containing compound, for the catalysis of the urethane reaction in a coating material system, for the production of polyurethanes, for the production of a polyurethane according to any of Claims 10 to 13, for the production of a paint, for the repair of a paint finish, for automotive refinishing, and/or for the coating of parts for installation in or on automobiles, of plastics substrates, or of commercial vehicles.

## Revendications

1. Système d'agent de revêtement comprenant les composants (A) à (C), avec
(A) au moins un composé contenant des groupes polyhydroxyle,
(B) au moins un composé contenant des groupes polyisocyanate et
(C) au moins un catalyseur, qui contient, en tant que composants métalliques, du lithium (Li) et du bismuth (Bi) et où le rapport molaire du lithium au bismuth vaut au moins 7:1 [mol/mol],
où
i) les composants (A), (B) et (C) se présentent séparément les uns des autres ou
ii) sont mélangés complètement ou au moins partiellement les uns aux autres.

2. Système d'agent de revêtement selon la revendication 1, **caractérisé en ce que** le catalyseur selon le composant (C) présente
i) un rapport molaire du lithium au bismuth de 7,5:1 à 12:1 [mol/mol], en particulier de 8:1 à 10:1 [mol/mol], et/ou
ii) au moins un composant métallique supplémentaire, de préférence du zinc (Zn).

3. Système d'agent de revêtement selon la revendication 1 ou 2, **caractérisé en ce que** dans le système d'agent de revêtement
i) le composé contenant des groupes polyhydroxyle selon le composant (A) est choisi parmi le groupe des polyacrylates-polyols, des polyméthacrylates-polyols, des polyesters-polyols, des polyuréthanes-polyols et/ou des polysiloxanes-polyols, en particulier parmi le groupe des polyacrylates-polyols et/ou des polyméthacrylates-polyols, et/ou
ii) le composé contenant des polyisocyanates selon le composant (B) est choisi parmi le diisocyanate de 1,6-hexaméthylène, l'isophorone-diisocyanate, le diisocyanate de 4,4'-méthylènedicyclohexyle, les dimères-biuret des diisocyanates susmentionnés, les iminooxadiazinediones des diisocyanates susmentionnés et/ou les trimères asymétriques des diisocyanates susmentionnés.

4. Système d'agent de revêtement selon l'une quelconque des revendications 1 à 3, **caractérisé en ce que** l'indice d'acide du composé contenant des groupes polyhydroxyle selon le composant (A) ne vaut pas plus de 9 mg KOH/g du composé correspondant contenant des groupes polyhydroxyle, de préférence pas plus de 7 mg KOH/g du composé correspondant contenant des groupes polyhydroxyle, en particulier 0,5 à 5 mg KOH/g du composé correspondant contenant des groupes polyhydroxyle.

5. Système d'agent de revêtement selon l'une quelconque des revendications 1 à 4, **caractérisé en ce que** le système d'agent de revêtement comprend au moins un composant supplémentaire (D) à (J), qui est choisi parmi des composés contenant des groupes hydroxyle (D), des résines aminoplastes et/ou des tris(alcoxycarbonylamino)triazines (E), des additifs de vernis (F), des pigments (H), d'autres charges (I) et/ou solvants (J),
où
i) les composants individuels (D) à (J) se présentent sous forme séparée les uns des autres ou
ii) sont mélangés complètement ou au moins partiellement les uns avec les autres et/ou avec les composants (A) à (C),
de préférence le système d'agent de revêtement comprend au moins un composant supplémentaire choisi parmi des composés contenant des groupes hydroxyles (D), des additifs de vernis (F), des pigments (H) et/ou des solvants (J).

6. Système d'agent de revêtement selon l'une quelconque des revendications 1 à 5, **caractérisé en ce que**
i) le système d'agent de revêtement n'est pas aqueux, et/ou
ii) les composants (A) et/ou (B) constituent à chaque fois un mélange avec au moins un solvant (J), mais les composants (A) et (B) se présentant sous forme séparée les uns des autres, et/ou
iii) le catalyseur selon le composant (C) est contenu complètement ou au moins partiellement dans au moins l'un des composants (A) ou (B) se présentant sous forme séparée, de préférence dans le composant (A).

7. Système d'agent de revêtement selon l'une quelconque des revendications 1 à 6, **caractérisé en ce que** le catalyseur selon le composant (C) se présente sous forme de sel, de préférence sous forme de sel de Li et/ou de sel de Bi avec des acides carboxyliques en C₆-C₁₈ en tant que constituant anionique du sel respectif, en particulier sous forme d'octoate de Bi, d'octoate de Li, de sel de Li ou de Bi de l'acide C₁₀-néodécanoïque et/ou de sel de Li ou de Bi de l'acide C₉-néononanoïque.

8. Système d'agent de revêtement selon l'une quelconque des revendications 1 à 7, **caractérisé en ce que** le système d'agent de revêtement se présente sous forme de mélange complet des composants (A), (B) et (C) ainsi que des composants (D) à (J) éventuellement présents.

9. Procédé de fabrication d'un système d'agent de revêtement selon la revendication 8, **caractérisé en ce que** les composants (A), (B) et (C) ainsi que les composants (D) à (J) éventuellement présents sont fournis séparément les uns des autres et sont ensuite mélangés les uns aux autres,
de préférence le mélange s'effectuant à la température ambiante, les composants (A) et (C) étant mélangés préalablement et/ou le composant (B) étant ajouté au composant (A) ou dans un mélange contenant le composant (A).

10. Procédé de fabrication d'un polyuréthane par durcissement au moins partiel ou complet, de préférence par durcissement complet du système d'agent de revêtement selon la revendication 8.

11. Procédé selon la revendication 10, **caractérisé en ce que** le polyuréthane constitue une couche ou un revêtement ou au moins un constituant d'une couche ou d'un revêtement, de préférence la couche ou le revêtement est une couche de vernis.

12. Procédé selon la revendication 10 ou 11, **caractérisé en ce que** le polyuréthane contient au moins un pigment (H) et/ou **en ce que** le polyuréthane est appliqué sous forme de couche sur une couche de vernis de base qui contient éventuellement au moins un pigment (H), ou sur un substrat éventuellement préalablement revêtu.

13. Procédé selon l'une quelconque des revendications 10 à 12, **caractérisé en ce que** le durcissement du polyuréthane s'effectue à des températures de 20 à 80°C, de préférence de 20 à 60°C, la couche de vernis de base optionnelle ayant éventuellement été préalablement séchée à des températures de 20°C à 80 °C.

14. Utilisation d'un système d'agent de revêtement selon l'une quelconque des revendications 1 à 8 ou d'un polyuréthane qui a été fabriqué selon un procédé selon l'une quelconque des revendications 10 à 13, en tant que vernis, pour la peinture automobile, pour la réparation de vernis, pour la peinture de réparation automobile et/ou pour le revêtement de composants automobiles, de substrats en plastique ou de véhicules utilitaires, de préférence le vernis est un vernis transparent ou un vernis pigmenté.

15. Procédé de production d'un revêtement, **caractérisé en ce que** l'on applique sur un substrat éventuellement préalablement revêtu ou sur une couche de vernis de base, au moins un système d'agent de revêtement selon l'une quelconque des revendications 1 à 8.

16. Procédé selon la revendication 15, **caractérisé en ce que** le revêtement comprend un polyuréthane qui est obtenu par durcissement au moins partiel ou complet, de préférence par durcissement complet du système d'agent de revêtement.

17. Utilisation d'un catalyseur (C) qui contient, en tant que composants métalliques, du lithium (Li) et du bismuth (Bi) et où le rapport molaire du lithium au bismuth vaut au moins 7:1 [mol/mol], dans un système d'agent de revêtement selon l'une quelconque des revendications 1 à 8, qui comprend, en plus du catalyseur (C), également les composants (A) et (B), avec (A), au moins un composé contenant des groupes polyhydroxyles, et (B), au moins un composé contenant des polyisocyanates, pour la catalyse de la réaction de formation d'uréthanne dans un système d'agent de revêtement, pour la préparation de polyuréthanes, pour la préparation d'un polyuréthane selon l'une quelconque des revendications 10 à 13, pour la fabrication d'un vernis, pour la réparation d'un vernis, pour la peinture de réparation automobile et/ou pour le revêtement de composants automobiles, de substrats en plastique ou de véhicules utilitaires.
